# EUROPEAN PATENT APPLICATION

(11) **EP 4 398 658 A1**
(43) Date of publication of application: **10.07.2024**
(21) Application number: 22863365.7
(22) Date of filing: 29.08.2022
(51) Int. Cl.: H04W 60/02

(54) **INFORMATION PROCESSING METHOD AND APPARATUS, COMMUNICATION DEVICE, AND READABLE STORAGE MEDIUM**

(30) Priority: 03.09.2021 CN 202111034448
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Lavoix
(86) International application number: PCT/CN2022/115440
(87) International publication number: WO 2023/030229

(57) **Abstract**

This application discloses an information processing method and apparatus, a communication device, and a readable storage medium, and pertains to the field of communication technologies. The information processing method in the embodiments of this application includes: obtaining, by a first communication device, first information, where the first information includes at least one of the following: information about a task execution mode of a terminal, state information for the task execution mode of the terminal, activation time information for the task execution mode of the terminal, and deactivation time information for the task execution mode of the terminal; and performing, by the first communication device, a first operation based on the first information, where the first operation includes at least one of the following: sending second information; and requesting for deregistration and/or re-initiating registration after deregistration; where the second information includes at least one of the following: information about the task execution mode of the terminal, state information for the task execution mode of the terminal, activation time information for the task execution mode of the terminal, and deactivation time information for the task execution mode of the terminal.

## Description

### CROSS-REFERENCE TO RELATED APPLICATIONS

This application claims priority to Chinese Patent Application No. 202111034448.1, filed in China on September 3, 2021, which is incorporated herein by reference in its entirety.

### TECHNICAL FIELD

This application pertains to the field of communication technologies, and specifically, relates to an information processing method and apparatus, a communication device, and a readable storage medium.

### BACKGROUND

A digital twin can be used to simulate statuses of a physical network and entity terminals to implement verification and performance simulation of new services and new technologies, so as to reduce costs and improve reliability.

The digital twin can be simulation of a function, status, or the like of a physical network and/or entity terminals. The digital twin task can include a test task performed in a digital twin domain.

A digital twin task may require mutual cooperation and execution between a terminal and a network, for example, a call process initiated by the terminal as a caller. Currently, whether and how the terminal executes a service other than a digital twin service during execution of the digital twin service needs to be addressed.

### SUMMARY

Embodiments of this application provide an information processing method and apparatus, a communication device, and a readable storage medium, so as to resolve the prior-art problem of not defining how to perform information processing in different task execution modes.

According to a first aspect, an information processing method is provided, including:
obtaining, by a first communication device, first information, where the first information includes at least one of the following: information about a task execution mode of a terminal, state information for the task execution mode of the terminal, activation time information for the task execution mode of the terminal, and deactivation time information for the task execution mode of the terminal; and
performing, by the first communication device, a first operation based on the first information, where the first operation includes at least one of the following:
   sending second information; and
   requesting for deregistration and/or re-initiating registration after deregistration; where
   the second information includes at least one of the following: information about the task execution mode of the terminal, state information for the task execution mode of the terminal, activation time information for the task execution mode of the terminal, and deactivation time information for the task execution mode of the terminal.

According to a second aspect, an information processing method is provided, including:
obtaining, by a second communication device, second information, where the second information includes at least one of the following: information about a task execution mode of a terminal, state information for the task execution mode of the terminal, activation time information for the task execution mode of the terminal, and deactivation time information for the task execution mode of the terminal; and
performing, by the second communication device, a second operation based on the second information, where the second operation includes: determining and/or sending third information; where
the third information includes at least one of the following:
   information about the task execution mode of the terminal;
   configuration information related to the task execution mode;
   activation information for the configuration information related to the task execution mode;
   state information for the configuration information related to the task execution mode, where the state information is used to indicate that the configuration information is in an active state or an inactive state;
   activation information for the task execution mode; and
   state information for the task execution mode, where the state information is used to indicate that the task execution mode is in an active state or an inactive state.

According to a third aspect, an information processing method is provided, including:
obtaining, by a third communication device, third information, where the third information includes at least one of the following: information about a task execution mode of a terminal, configuration information related to the task execution mode, activation information for the configuration information, state information for the configuration information, activation information for the task execution mode, and state information for the task execution mode; and
performing, by the third communication device, a third operation based on the third information, where the third operation includes at least one of the following:
   activating the task execution mode;
   activating the configuration information related to the task execution mode;
   a fourth operation related to a full mode; and
   a fifth operation related to a mixed mode.

According to a fourth aspect, an information processing apparatus is provided, applied to a first communication device and including:
a first obtaining module, configured to obtain first information, where the first information includes at least one of the following: information about a task execution mode of a terminal, state information for the task execution mode of the terminal, activation time information for the task execution mode of the terminal, and deactivation time information for the task execution mode of the terminal; and
a first execution module, configured to perform a first operation based on the first information, where the first operation includes at least one of the following:
   sending second information; and
   requesting for deregistration and/or re-initiating registration after deregistration; where
   the second information includes at least one of the following: information about the task execution mode of the terminal, state information for the task execution mode of the terminal, activation time information for the task execution mode of the terminal, and deactivation time information for the task execution mode of the terminal.

According to a fifth aspect, an information processing apparatus is provided, applied to a second communication device and including:
a second obtaining module, configured to obtain second information, where the second information includes at least one of the following: information about a task execution mode of a terminal, state information for the task execution mode of the terminal, activation time information for the task execution mode of the terminal, and deactivation time information for the task execution mode of the terminal; and
a second execution module, configured to perform a second operation based on the second information, where the second operation includes: determining and/or sending third information; where
the third information includes at least one of the following:
   information about the task execution mode of the terminal;
   configuration information related to the task execution mode;
   activation information for the configuration information related to the task execution mode;
   state information for the configuration information related to the task execution mode, where the state information is used to indicate that the configuration information is in an active state or an inactive state;
   activation information for the task execution mode; and
   state information for the task execution mode, where the state information is used to indicate that the task execution mode is in an active state or an inactive state.

According to a sixth aspect, an information processing apparatus is provided, applied to a third communication device and including:
a third obtaining module, configured to obtain third information, where the third information includes at least one of the following: information about a task execution mode of a terminal, configuration information related to the task execution mode, activation information for the configuration information, state information for the configuration information, activation information for the task execution mode, and state information for the task execution mode; and
a third execution module, configured to perform a third operation based on the third information; where the third operation includes at least one of the following:
   activating the task execution mode;
   activating the configuration information related to the task execution mode;
   a fourth operation related to a full mode; and
   a fifth operation related to a mixed mode.

According to a seventh aspect, a communication device is provided, where the communication device includes a processor, a memory, and a program or instructions stored in the memory and capable of running on the processor, and when the program or instructions are executed by the processor, the steps of the method according to the first aspect are implemented; or the steps of the method according to the second aspect are implemented; or the steps of the method according to the third aspect are implemented.

According to an eighth aspect, a first communication device is provided, including a processor and a communication interface, where the communication interface is configured to obtain first information, where the first information includes at least one of the following: information about a task execution mode of a terminal, state information for the task execution mode of the terminal, activation time information for the task execution mode of the terminal, and deactivation time information for the task execution mode of the terminal; and the processor is configured to perform a first operation based on the first information, where the first operation includes at least one of the following:
sending second information; and
requesting for deregistration and/or re-initiating registration after deregistration; where
the second information includes at least one of the following: information about the task execution mode of the terminal, state information for the task execution mode of the terminal, activation time information for the task execution mode of the terminal, and deactivation time information for the task execution mode of the terminal.

According to a ninth aspect, a second communication device is provided, including a processor and a communication interface, where the communication interface is configured to obtain second information, where the second information includes at least one of the following: information about a task execution mode of a terminal, state information for the task execution mode of the terminal, activation time information for the task execution mode of the terminal, and deactivation time information for the task execution mode of the terminal; and the processor is configured to perform a second operation based on the second information, where the second operation includes: determining and/or sending third information; where
the third information includes at least one of the following:
information about the task execution mode of the terminal;
configuration information related to the task execution mode;
activation information for the configuration information related to the task execution mode;
state information for the configuration information related to the task execution mode, where the state information is used to indicate that the configuration information is in an active state or an inactive state;
activation information for the task execution mode; and
state information for the task execution mode, where the state information is used to indicate that the task execution mode is in an active state or an inactive state.

According to a tenth aspect, a third communication device is provided, including a processor and a communication interface, where the communication interface is configured to obtain third information, where the third information includes at least one of the following: information about a task execution mode of a terminal, configuration information related to the task execution mode, activation information for the configuration information, state information for the configuration information, activation information for the task execution mode, and state information for the task execution mode; and the processor is configured to perform a third operation based on the third information, where the third operation includes at least one of the following:
activating the task execution mode;
activating the configuration information related to the task execution mode;
a fourth operation related to a full mode; and
a fifth operation related to a mixed mode.

According to an eleventh aspect, a readable storage medium is provided, where a program or instructions are stored in the readable storage medium; and when the program or instructions are executed by a processor, the steps of the method according to the first aspect are implemented, or the steps of the method according to the second aspect are implemented, or the steps of the method according to the third aspect are implemented.

According to a twelfth aspect, a chip is provided, where the chip includes a processor and a communication interface, the communication interface is coupled to the processor, and the processor is configured to run a program or instructions to implement the method according to the first aspect, or implement the method according to the second aspect, or implement the method according to the third aspect.

According to a thirteenth aspect, a computer program/program product is provided, where the computer program/program product is stored in a non-transitory storage medium, and the program/program product is executed by at least one processor to implement the steps of the method according to the first aspect, or the steps of the method according to the second aspect, or the steps of the method according to the third aspect.

According to a fourteenth aspect, a communication device is provided, configured to perform the steps of the method according to the first aspect, or perform the steps of the method according to the second aspect, or perform the steps of the method according to the third aspect.

In the embodiments of this application, communication devices in a digital twin network exchange information related to a task execution mode of a terminal, so as to implement configuration of digital twin tasks in different execution modes as well as activation, deactivation, and the like of the configuration for an entity terminal. In this way, information processing is implemented in different task execution modes.

### BRIEF DESCRIPTION OF DRAWINGS

FIG. 1 is a block diagram of a wireless communication system to which embodiments of this application are applicable;
FIG. 2 is a schematic flowchart of an information processing method according to an embodiment of this application;
FIG. 3 is a schematic flowchart of another information processing method according to an embodiment of this application;
FIG. 4 is a schematic flowchart of another information processing method according to an embodiment of this application;
FIG. 5 is a schematic flowchart of an information processing method of Example 1 according to an embodiment of this application;
FIG. 6 is a schematic flowchart of an information processing method of Example 2 according to an embodiment of this application;
FIG. 7 is a schematic flowchart of an information processing method of Example 3 according to an embodiment of this application;
FIG. 8 is a structural diagram of an information processing apparatus according to an embodiment of this application;
FIG. 9 is a structural diagram of another information processing apparatus according to an embodiment of this application;
FIG. 10 is a structural diagram of another information processing apparatus according to an embodiment of this application;
FIG. 11 is a structural diagram of a communication device according to an embodiment of this application;
FIG. 12 is a structural diagram of a terminal according to an embodiment of this application; and
FIG. 13 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

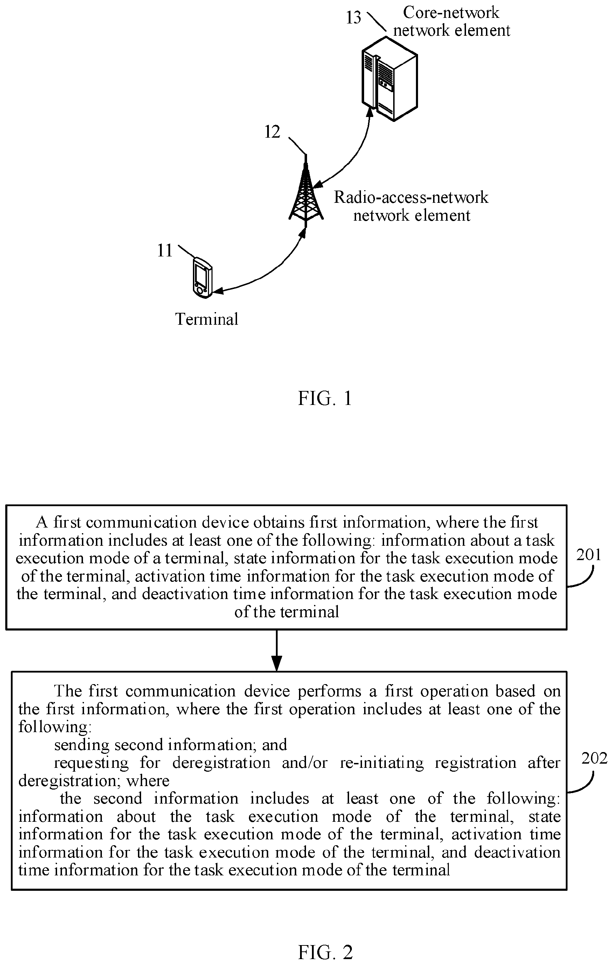

FIG. 1 is a block diagram of a wireless communication system to which the embodiments of this application are applicable. The network system shown in FIG. 1 includes: a terminal 11, a radio-access-network network element 12, and a core-network network element 13. In an embodiment of this application, the terminal 11 may be a terminal in a digital twin domain (for example, a virtual terminal) or an entity terminal (for example, a physical terminal). The radio-access-network network element 12 may be a radio-access-network network element in a digital twin domain (for example, a virtual radio-access-network network element) or a radio access network element in a physical network (for example, a physical radio-access-network network element). The core-network network element 13 may be a core-network network element in the digital twin domain (for example, a virtual core-network network element) or a core-network network element in a physical network (for example, a physical core-network network element).

In an implementation, the core-network network element may support the digital twin domain (for example, part of resources of a core-network network element of the physical network are used to support the digital twin domain). The radio-access-network network element may support the digital twin domain (for example, part of resources of a radio-access-network network element of the physical network are used to support the digital twin domain).

The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), pedestrian user equipment (Pedestrian User Equipment, PUE), and a smart home device (a home device with wireless communication function, such as refrigerator, TV, washing machine, or furniture). The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. The network-side device 12 may be a base station or a core network. The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (Evolved Node B, eNB), a home NodeB, a home evolved NodeB, a wireless local area network (Wireless Local Area Network, WLAN) access point, a wireless fidelity (Wireless Fidelity, WiFi) node, a transmission and reception Point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

In an optional embodiment of this application, "being able to" may mean at least one of the following: being allowed, supporting, being inclined, or being preferred to have a capability; and "being unable to" may mean at least one of the following: being not allowed, not supporting, being not inclined, or not having a capability.

In an optional embodiments of this application, obtaining or acquiring may be understood as acquiring from configuration, receiving, obtaining through receiving upon a request, obtaining through self-learning, obtaining through deduction based on non-received information, or obtaining through processing received information, which may be determined according to actual needs. This is not limited in the embodiments of this application. For example, when specific capability indication information sent by a device is not received, it can be deduced that the device does not support such capability.

In an optional embodiment of this application, transmitting may include broadcasting, broadcasting through a system message, or returning a response after receiving the request.

In an optional embodiment of this application, separate and independent may represent the same meaning and may be used interchangeably.

In an optional embodiment of this application, the communication device may include at least one of the following: a communication network element and a terminal.

In an optional embodiment of this application, the communication network element may include at least one of the following: a core-network network element and a radio-access-network network element.

In an optional embodiment of this application, a core-network (Core Network, CN) network element may include but is not limited to at least one of the following: a core network device, a core network node, a core network function, a core-network network element, a mobility management entity (Mobility Management Entity, MME), an access mobility management function (Access Management Function, AMF), a session management function (Session Management Function, SMF), a user plane function (User Plane Function, UPF), a serving gateway (serving Gate Way, SGW), a public data network gateway (Public Data Network Gate Way, PDN-GW), a policy control function (Policy Control Function, PCF), a policy and charging rules function unit (Policy and Charging Rules Function, PCRF), a general packet radio service (General Packet Radio Service, GPRS) serving support node (Serving GPRS Support Node, SGSN), a gateway GPRS support node (Gateway GPRS Support Node, GGSN), a unified data management (Unified Data Management, UDM), a unified data repository (Unified Data Repository, UDR), a home subscriber server (Home Subscriber Server, HSS), an application function (Application Function, AF), and a network element for digital twin task management.

In an optional embodiment of this application, a radio access network (Radio Access Network, RAN) network element may include but is not limited to at least one of the following: a radio access network device, a radio access network node, a radio access network function, a radio access network unit, a Third Generation Partnership Project (Third Generation Partnership Project, 3GPP) radio access network, a non-3GPP radio access network, a centralized unit (Centralized Unit, CU), a distributed unit (Distributed Unit, DU), a base station, an evolved Node B (evolved Node B, eNB), a 5G base station (gNB), a radio network controller (Radio Network Controller, RNC), a base station (NodeB), a non-3GPP interworking function (Non-3GPP Inter Working Function, N3IWF), an access controller (Access Controller, AC) node, an access point (Access Point, AP) device, a wireless local area network (Wireless Local Area Networks, WLAN) node, or a non-3GPP interworking function (Non-3GPP InterWorking Function, N3IWF).

In the embodiments of this application, UE (User Equipment) is a terminal. The terminal 11 may include a relay supporting terminal functions and/or a terminal supporting relay functions. The terminal may also be referred to as a terminal device or user equipment (User Equipment, UE). The terminal may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), an augmented reality (augmented reality, AR)/virtual reality (virtual reality, VR) device, a robot, a wearable device (Wearable Device), or an in-vehicle device. It should be noted that a specific type of the terminal is not limited in the embodiments of this application.

In addition, the embodiments of this application may be applied to a communication system such as 4G, 5G, and 6G.

In the related art, for an entity terminal, because the terminal may not be a terminal dedicated to twin tasks. For execution of digital twin tasks, there may be multiple task execution modes, (1) a full mode, where in this mode, the terminal is used exclusively for performing digital twin tasks; and (2) a mixed mode, where in this mode, the terminal needs to perform digital twin tasks and also needs to support live-network tasks of the terminal. However, the current technologies do not define how information processing is performed in different task execution modes.

The following describes in detail an information processing method provided in the embodiments of this application by using some embodiments and application scenarios thereof with reference to the accompanying drawings.

In the digital twin domain, the network may be a virtual network or a combination of a virtual network and a physical network (that is, a network that actually provides network services); and the terminal may be a virtual network or an entity terminal. Whether a virtual terminal or an entity terminal is used or whether a virtual network or physical network is used to perform the digital twin tasks depends on needs and objectives of the digital twin tasks. For example, for testing performance of a service under coverage of a specific region, an entity terminal may be more appropriate. For example, for testing one end-to-end process, a virtual terminal and a virtual network may be feasible; for example, for testing one end-to-end process of a new technology, a physical test terminal of a specific manufacturer is more appropriate. For the physical network, part of network resources may be used for the digital twin domain to perform digital twin tasks.

In an optional embodiment of this application, the digital twin domain includes at least one of the following: a virtual network (for example, a virtual core network and a virtual radio access network), a combination of a virtual network and a physical network (for example, a virtual core network and a physical radio access network), resources in the physical network that are used for digital twin services, virtual terminals, and entity terminals.

In an optional embodiment of this application, the physical network is a network that actually provides network services. The virtual network is a simulation of the physical network.

In an optional embodiment of this application, a digital twin task may include performing one of the following in the digital twin domain: a service (including a service process, a service function, or the like), a network function, a policy (for example, a network policy, or a policy for use on a terminal), a reproduction of a fault, a test task, or the like. The digital twin task may be used for, but is not limited to, one of the following: validating new services, verifying new services, troubleshooting and network optimization, providing a basis for network expansion, verifying an optimization effect of a policy, and the like.

In an optional embodiment of this application, the digital twin service includes one of the following: one or more digital twin tasks, and all digital twin tasks of the terminal.

In another optional embodiment of this application, the digital twin service is equivalent to the digital twin task.

In an optional embodiment of this application, the time information, time period, time period range, and/or time interval includes one of the following: a start time, a duration, and an end time. Timing for the duration starts from a start time or starts upon reception of the time information. An end time point of timing for the duration may serve as the end time.

Activation time information provided in this embodiment of this application includes at least one of the following: a start time, a duration, and an end time.

In an implementation, the start time in the activation time information is an activation start time; the duration in the activation time information is an activation duration; and the end time in the activation time information is an activation end time. Start of the activation time indicates entering an active state; and end of the activation time indicates entering an inactive state.

Deactivation time information provided in this embodiment of this application includes at least one of the following: a start time, a duration, and an end time.

In an implementation, the start time in the deactivation time information is a deactivation start time; the duration in the deactivation time information is a deactivation duration; and the end time in the deactivation time information is a deactivation end time. Start of the deactivation time indicates entering an inactive state; and end of the deactivation time indicates entering an active state.

As shown in FIG. 2, at least one embodiment of this application provides an information processing method applied to a first communication device, and the first communication device includes one of the following: a terminal, an application function AF, a network element (for example, AMF) for registration control, and a network element (for example, a unified data management UDM or a unified data storage UDR) for user data management. The method includes the following steps.

Step 201: The first communication device obtains first information, where the first information includes at least one of the following: information about a task execution mode of a terminal, state information for the task execution mode of the terminal, activation time information for the task execution mode of the terminal, and deactivation time information for the task execution mode of the terminal.

For example, the first communication device obtains the first information from at least one of the following:
first information set by a user on the first communication device;
first information preconfigured on the first communication device; and
first information received from at least one of the following: a network element for user data management, a network element for registration control, and a network element for digital twin task management.

Step 202: The first communication device performs a first operation based on the first information, where the first operation includes at least one of the following:
sending second information; and
requesting for deregistration and/or re-initiating registration after deregistration; where
the second information includes at least one of the following: information about the task execution mode of the terminal, state information for the task execution mode of the terminal, activation time information for the task execution mode of the terminal, and deactivation time information for the task execution mode of the terminal.

For example, the first communication device sends the second information to the second communication device; where the second communication device includes one of the following: a network element for registration control (for example, an access and mobility management function AMF), and a network element for user data management (for example, a unified data management UDM or a unified data storage UDR).

In an implementation, the first communication device obtains the second information before sending the second information. The second information is the same or partially the same or different or partially different from the first information.

In an implementation, deregistration includes detach.

In an implementation, sending the information about the task execution mode of the terminal includes: sending the information about the task execution mode of the terminal to a network (for example, a core-network network element (for example, an access and mobility management function AMF)).

In at least one embodiment of this application, the information about the task execution mode of the terminal includes at least one of the following:
full mode; where in the full mode, the terminal is used only for performing a digital twin service or the terminal is not used for a service other than the digital twin service; and
mixed mode; where in the mixed mode, the terminal is able to be used only for performing a digital twin service or a service other than the digital twin service.

Optionally, the digital twin service may include one or more digital twin tasks.

Optionally, a service other than the digital twin service is, for example, one of the following: a service in a complete physical network to which the entity terminal accesses, and a normal user service of the terminal (for example, surfing the Internet or making a call).

In an optional embodiment of this application, the state information for the task execution mode of the terminal includes one of the following:
the task execution mode of the terminal is in an active state or is activated; and
the task execution mode of the terminal is in an inactive state or is deactivated.

In an optional embodiment, the task execution mode of the terminal includes one of the following:
a task execution mode at a digital twin service granularity (applicable to all digital twin tasks);
a task execution mode per digital twin task (for example, task execution modes for different digital twin tasks may be different or the same);
a task execution mode per time interval (for example, task execution modes may be different for different time intervals); and
a task execution mode per geographic interval (for example, task execution modes may be different for different geographic intervals).

Optionally, the digital twin service may include one or more digital twin tasks.

In an implementation, in a case that the digital twin service includes a plurality of digital twin tasks, the task execution mode of the digital twin service may be applied to all of the digital twin tasks. The task execution mode corresponding to each digital twin task of one terminal may be the same.

In another implementation, in a case that the digital twin service includes a plurality of digital twin tasks, a per-digital-twin-task task execution mode corresponding to each digital twin task of one terminal may be different.

In an implementation, the task execution mode per time interval means that the task execution mode may be different at different time periods. For example, the daytime may be a mixed mode and the nighttime may be a full mode.

In an implementation, the task execution mode per geographic interval means that the task execution mode may be different in different regions. For example, an office area may be a mixed mode and a residential area may be a full mode.

In an optional embodiment, the first communication device sending the second information based on the first information in step 202 includes:
sending, by the first communication device, the information about the task execution mode of the terminal in a case that a first condition is satisfied, where the first condition includes at least one of the following:
the first communication device is a terminal or an application function AF network element;
at least one of the following is generated or updated: information about the task execution mode of the terminal, state information for the task execution mode of the terminal, and activation time information for the task execution mode of the terminal;
a first request is received, where the first request is used for one of the following: requesting the terminal to perform a digital twin task, or requesting the terminal to perform a digital twin service;
the task execution mode of the terminal is activated or changes from deactivated to activated;
an activation time of the task execution mode of the terminal is reached;
a deactivation time of the task execution mode of the terminal is reached;
a first query is received, where the first query is used to query one of the following: whether the terminal is allowed to perform a digital twin task, or whether the terminal is allowed to perform a digital twin service;
the terminal permits a digital twin task;
the terminal permits a digital twin service;
the terminal has a capability of digital twin service; and
the terminal accesses a first network, the first network being a network supporting a digital twin domain; and
the information about the task execution mode of the terminal is sent to the first network.

In another optional embodiment, the first communication device sending the second information based on the first information in step 202 includes:
sending, by the first communication device, the state information for the task execution mode of the terminal in a case that a second condition is satisfied, where the second condition includes at least one of the following:
the first communication device is a terminal or an application function AF network element;
the task execution mode of the terminal is activated, or deactivated, or changes from deactivated to activated, or changes from activated to deactivated;
an activation time of the task execution mode of the terminal is reached; and
a deactivation time of the task execution mode of the terminal is reached.

In at least one optional embodiment of this application, in a case that the terminal satisfies a third condition, the state information for the task execution mode of the terminal is an active state, or the first information includes activation time information; where the third condition includes at least one of the following:
the terminal permits a digital twin task; and
the terminal permits a digital twin service.

For example, if the first information includes the activation time information for the task execution mode of the terminal, that is, activating the task execution mode of the terminal at an agreed time and deactivating the task execution mode of the terminal at an agreed time.

In still another optional embodiment, the first communication device sending the second information based on the first information in step 202 includes:
sending, by the first communication device, the second information in a case that a fourth condition is satisfied, where the fourth condition includes at least one of the following:
the first communication device is a network element for user data management;
a third request is received, where the third request is used to request one of the following: subscription information of the terminal, and subscription information for a digital twin task; and
a first association is established or a first association establishment request is received, where the first association is a per-terminal association between a network element for registration control (for example, an access and mobility management function AMF) and a network element for user data management (for example, a unified data management UDM). For example, a terminal-based association between the AMF and the UDM is established, or a request for establishing the terminal-based association between the AMF and the UDM is received.

In at least one embodiment of this application, the information about the task execution mode of the terminal includes one of the following:
information about a task execution mode in subscription information of the terminal;
information about a task execution mode for a digital twin service of the terminal; that is, the task execution mode information is applicable to all digital twin tasks of the terminal; and
information about a task execution mode per digital twin task of the terminal, that is, the task execution mode information for different digital twin tasks may be the same or different.

In another optional embodiment, the first communication device requesting deregistration and/or re-initiating registration after deregistration based on the first information in step 202 includes:
in a case that a fifth condition is satisfied, requesting, by the first communication device based on the first information, for deregistration and/or re-initiating registration after deregistration; where the fifth condition includes at least one of the following:
the first communication device is a terminal;
the task execution mode of the terminal is the full mode;
the task execution mode of the terminal is activated, or changes from deactivated to activated, or changes from activated to deactivated;
an activation time of the task execution mode of the terminal is reached; and
a deactivation time of the task execution mode of the terminal is reached.

In other words, in the full mode, the terminal no longer continues a non digital twin service, and/or network access for a service other than the digital twin service. In this case, the terminal may de-register the non digital twin service and re-register the digital twin service.

In at least one optional embodiment of this application, step 201 includes at least one of the following:
obtaining, by the first communication device, the information about the task execution mode of the terminal based on at least one of the following: information about a task execution mode of the terminal preconfigured on the first communication device or information about a task execution mode of the terminal configured by the user on the first communication device;
obtaining, by the first communication device, the state information for the task execution mode of the terminal based on at least one of the following: state information of a task execution mode of the terminal preconfigured on the first communication device, state information of a task execution mode of the terminal configured by the user on the first communication device, or state information of a task execution mode of the terminal received from a first network;
receiving, by the first communication device, a first request from the first network, where the first request is used for one of the following: requesting the terminal to perform a digital twin task, or requesting the terminal to perform a digital twin service;
obtaining, by the first communication device, a second request based on at least one of the following: a second request received from the first network or a second request set by the user in the first communication device; where the second request is used for requesting to activate the task execution mode of the terminal;
receiving, by the first communication device, a first query from the first network; where the first query is used to query one of the following: whether the terminal is allowed to perform a digital twin task, or whether the terminal is allowed to perform a digital twin service; and
receiving, by the first communication device, a third request from a network element for registration management, where the third request is used to request one of the following: subscription information of the terminal, and subscription information for a digital twin task.

In at least one optional embodiment of this application, the first information further includes at least one of the following:
the first communication device is a terminal or an application function AF network element;
a first request, where the first request is used for one of the following: requesting the terminal to perform a digital twin task, or requesting the terminal to perform a digital twin service;
a second request, where the second request is used to request to activate a task execution mode of the terminal;
a first query, where the first query is used to query one of the following: whether the terminal is allowed to perform a digital twin task, or whether the terminal is allowed to perform a digital twin service; and
a third request, where the third request is used to request one of the following: subscription information of the terminal, and subscription information for a digital twin task.

In an optional embodiment, a deregistration request message for requesting deregistration includes one of the following:
information about a task execution mode of the terminal; and
activation indication information for the task execution mode of the terminal, where the activation indication information is used to indicate one of the following: activating the task execution mode of the terminal, or activating a full mode.

It is easy to understand that in this embodiment, communication devices in a digital twin network exchange information related to a task execution mode of a terminal, so as to implement configuration of digital twin tasks in different execution modes, activation and deactivation of the configuration, and the like for a entity terminal. In this way, information processing is implemented in different task execution modes.

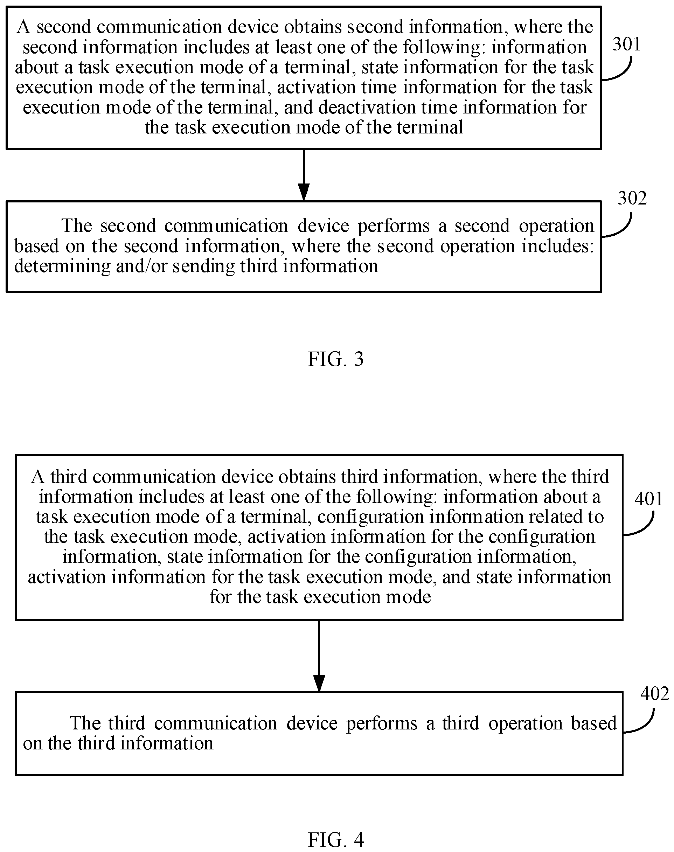

As shown in FIG. 3, an embodiment of this application further provides an information processing method applied to a second communication device, and the second communication device includes one of the following: a network element for registration control (for example, an access and mobility management function AMF), and a network element for user data management (for example, a unified data management UDM or a unified data storage UDR). The method includes the following steps.

Step 301: The second communication device obtains second information, where the second information includes at least one of the following: information about a task execution mode of a terminal, state information for the task execution mode of the terminal, activation time information for the task execution mode of the terminal, and deactivation time information for the task execution mode of the terminal.

For example, the second communication device may obtain the second information from the first communication device. The first communication device includes one of the following: a terminal, an application function AF, a network element for registration control (for example, AMF), and a network element for user data management (for example, a unified data management UDM or a unified data storage UDR).

Step 302: The second communication device performs a second operation based on the second information, where the second operation includes: determining and/or sending third information.

For example, the second communication device sends the determined third information to a third communication device, where the third communication device is a terminal.

The third information includes at least one of the following:
information about the task execution mode of the terminal;
configuration information related to the task execution mode;
activation information for the configuration information related to the task execution mode;
state information for the configuration information related to the task execution mode, where the state information is used to indicate that the configuration information is in an active state or an inactive state;
activation information for the task execution mode; and
state information for the task execution mode, where the state information is used to indicate that the task execution mode is in an active state or an inactive state.

In at least one embodiment of this application, the information about the task execution mode of the terminal includes at least one of the following:
full mode; where in the full mode, the terminal is used only for performing a digital twin service or the terminal is not used for a service other than the digital twin service; and
mixed mode; where in the mixed mode, the terminal is able to be used only for performing a digital twin service or a service other than the digital twin service.

Optionally, the digital twin service may include one or more digital twin tasks.

Optionally, a service other than the digital twin service is, for example, a normal user service of the terminal, such as surfing the Internet or making a call.

In an optional embodiment of this application, the state information for the task execution mode of the terminal includes one of the following:
the task execution mode of the terminal is in an active state or is activated; and
the task execution mode of the terminal is in an inactive state or is deactivated.

In an optional embodiment, the task execution mode of the terminal includes one of the following:
a task execution mode at a digital twin service granularity, applicable to all digital twin tasks;
a task execution mode per digital twin task, that is, task execution modes for different digital twin tasks may be different or the same;
a task execution mode per time interval; and
a task execution mode per geographic interval.

Optionally, the digital twin service may include one or more digital twin tasks.

In an implementation, in a case that the digital twin service includes a plurality of digital twin tasks, the task execution mode of the digital twin service may be applied to all of the digital twin services. The task execution mode corresponding to each digital twin task of one terminal may be the same.

In another implementation, in a case that the digital twin service includes a plurality of digital twin tasks, a per-digital-twin-task task execution mode corresponding to each digital twin task of one terminal may be different.

In an implementation, the task execution mode per time interval means that the task execution mode may be different at different time periods. For example, the daytime may be a mixed mode and the nighttime may be a full mode.

In an implementation, the task execution mode per geographic interval means that the task execution mode may be different in different regions. For example, an office area may be a mixed mode and a residential area may be a full mode.

Correspondingly, in an optional embodiment of this application, the configuration information related to the task execution mode includes at least one of the following:
first configuration information related to the full mode; and
second configuration information related to the mixed mode.

In an optional embodiment, the first configuration information related to the full mode includes at least one of the following:
first indication information, where the first indication information is used to indicate the terminal to perform deregistration and/or re-registration after deregistration;
second indication information for indicating the terminal to use a second certificate or second subscription information, where the second certificate or the second subscription information is used for a digital twin service;
a first network list, where the first network list includes networks supporting a digital twin domain; and
first slice information, where the first slice information includes slices supporting the digital twin domain.

The first network list is used to request the terminal to select a network from the first network list.

In another optional embodiment, the second configuration information related to the mixed mode includes at least one of the following:
first slice information, where the first slice information includes slices supporting the digital twin domain; and
second slice information, where the second slice information includes slices supporting a non digital twin domain.

The first slice information is used to request a terminal to request for a slice in the first slice information. For example, the first slice information is used to request the terminal to request a slice in the first slice information during registration.

In at least one optional embodiment of this application, in a case that a sixth condition is satisfied, the configuration information includes the first configuration information related to the full mode, where the sixth condition includes at least one of the following:
the task execution mode of the terminal is the full mode;
the terminal permits a digital twin service;
the task execution mode of the terminal is activated or changes from deactivated to activated; and
an activation time of the task execution mode of the terminal is reached.

In another optional embodiment of this application, in a case that a seventh condition is satisfied, the configuration information includes the second configuration information related to the mixed mode, where the seventh condition includes at least one of the following:
the task execution mode of the terminal is a mixed mode;
the terminal permits a digital twin service;
the task execution mode of the terminal is activated or changes from deactivated to activated; and
an activation time of the task execution mode of the terminal is reached.

Further, in still another optional embodiment of this application, the third information further includes at least one of the following:
activation indication information for the first configuration information; and
activation indication information for the second configuration information.

The activation indication information is used to indicate activating corresponding configuration information. For example, the activation indication information for the first configuration information is used to indicate activating the first configuration information, and the activation indication information for the second configuration information is used to indicate activating the second configuration information.

In at least one optional embodiment of this application, the activation information for the configuration information includes at least one of the following:
activation time information of the configuration information; where the activation time information includes at least one of the following: a start time, a duration, and a reception time;
deactivation time information of the configuration information; where the deactivation time information includes at least one of the following: a start time, a duration, and a reception time;
third indication information for activating the configuration information;
fourth indication information for deactivating the configuration information; and
fifth indication information for indicating the configuration information being activated upon reception.

In an implementation, the configuration information is activated at a predetermined time, and the configuration information is deactivated at an agreed time.

In another implementation, activation indication information for activating the configuration information is sent when the configuration information needs to be activated.

In another implementation, the configuration information is immediately activated upon reception of the configuration information.

In at least one embodiment of this application, the activation information for the task execution mode includes at least one of the following:
activation time information for the task execution mode; where the activation time information includes at least one of the following: a start time, a duration, and a reception time;
deactivation time information for the task execution mode; where the deactivation time information includes at least one of the following: a start time, a duration, and a reception time;
sixth indication information for activating the task execution mode;
seventh indication information for deactivating the task execution mode; and
eighth indication information for indicating the task execution mode being activated upon reception.

In an implementation, the task execution mode is activated at a predetermined time, and the task execution mode is deactivated at an agreed time.

In another implementation, activation indication information for activating the task execution mode is sent when the task execution mode needs to be activated.

In another implementation, the task execution mode is immediately activated upon reception of the task execution mode.

In an implementation, when the task execution mode is activated, configuration information related to the task execution mode is activated at the same time.

In another implementation, when the configuration information related to the task execution mode is activated, the task execution mode is activated at the same time.

In another implementation, when the task execution mode is deactivated, the configuration information related to the task execution mode is deactivated at the same time.

In another implementation, when the configuration information related to the task execution mode is deactivated, the task execution mode is deactivated at the same time.

It is easy to understand that in this embodiment, communication devices in a digital twin network exchange information related to a task execution mode of a terminal, so as to implement configuration of digital twin tasks in different execution modes, activation and deactivation of the configuration, and the like for a entity terminal. In this way, information processing is implemented in different task execution modes.

As shown in FIG. 4, an embodiment of this application further provides an information processing method applied to a third communication device. The third communication device includes a terminal. The method includes the following steps.

Step 401: The third communication device obtains third information, where the third information includes at least one of the following: information about a task execution mode of a terminal, configuration information related to the task execution mode, activation information for the configuration information, state information for the configuration information, activation information for the task execution mode, and state information for the task execution mode.

For example, the third communication device obtains the third information from a second communication device; where the second communication device includes one of the following: a network element for registration control (for example, an access and mobility management function AMF), and a network element for user data management (for example, a unified data management UDM or a unified data storage UDR).

Step 402: The third communication device performs a third operation based on the third information.

In an implementation, the terminal first obtains configuration information related to the task execution mode and the configuration information related to the task execution mode is in an inactive state, and subsequently obtains activation information for the task execution mode or activation information for the configuration information, for example, indication information for activating the configuration information or indication information for activating the task execution mode.

In another implementation, both the configuration information related to the task execution mode and (the activation information for the task execution mode or the activation information for the configuration information) are obtained, such as an activation time for the task execution mode or an activation time for the configuration information. The activation time is generally later than a time of obtaining the configuration information related to the task execution mode.

In an implementation, the third communication device is a terminal.

In at least one embodiment of this application, the third operation includes at least one of the following:
activating the task execution mode;
activating the configuration information related to the task execution mode;
a fourth operation related to a full mode; and
a fifth operation related to a mixed mode.

In at least one embodiment of this application, the information about the task execution mode of the terminal includes at least one of the following:
full mode; where in the full mode, the terminal is used only for performing a digital twin service or the terminal is not used for a service other than the digital twin service; and
mixed mode; where in the mixed mode, the terminal is able to be used only for performing a digital twin service or a service other than the digital twin service.

Optionally, the digital twin service may include one or more digital twin tasks.

Optionally, a service other than the digital twin service is, for example, a normal user service of the terminal, such as surfing the Internet or making a call.

In an optional embodiment, the fourth operation related to the full mode includes at least one of the following:
deregistering a currently accessed network;
selecting and registering with a network in a first network list, where the first network list includes networks supporting a digital twin domain; and the first network list is used to request the terminal to select a network from the first network list;
accessing a network by using a second certificate or second subscription information, where the second certificate or the second subscription information is used for a digital twin service; and
requesting a slice in first slice information, where the first slice information includes slices supporting the digital twin domain. The first slice information is used to request a terminal to request for a slice in the first slice information. For example, the first slice information is used to request the terminal to request a slice in the first slice information during registration.

In another optional embodiment, the fifth operation related to the mixed mode includes at least one of the following:
requesting a slice in first slice information, where the first slice information includes slices supporting a digital twin domain; and the first slice information is used to request a terminal to request for a slice in the first slice information, for example, the first slice information is used to request the terminal to request a slice in the first slice information during registration; and
requesting a slice in second slice information, where the second slice information includes slices supporting a non digital twin domain.

In at least one optional embodiment of this application, the method further includes:
in a case that an eighth condition is satisfied, performing, by the third communication device, the fourth operation related to the full mode; where the eighth condition includes at least one of the following:
   the task execution mode of the terminal is the full mode;
   the task execution mode of the terminal is activated or changes from deactivated to activated;
the configuration information related to the task execution mode of the terminal is an active state; and
an activation time of the task execution mode of the terminal is reached.

In still another optional embodiment of this application, the method further includes:
in a case that a ninth condition is satisfied, performing, by the third communication device, the fifth operation related to the mixed mode; where the ninth condition includes at least one of the following:
the task execution mode of the terminal is a mixed mode;
the task execution mode of the terminal is activated or changes from deactivated to activated;
the configuration information related to the task execution mode of the terminal is an active state; and
an activation time of the task execution mode of the terminal is reached.

Optionally, the state information for the task execution mode is consistent with the state information for the configuration information.

In an implementation, when the task execution mode is activated, configuration information related to the task execution mode is activated at the same time.

In an implementation, when the configuration information related to the task execution mode is activated, the task execution mode is activated at the same time.

In another implementation, when the task execution mode is deactivated, the configuration information related to the task execution mode is deactivated at the same time.

In another implementation, when the configuration information related to the task execution mode is deactivated, the task execution mode is deactivated at the same time.

It is easy to understand that in this embodiment, communication devices in a digital twin network exchange information related to a task execution mode of a terminal, so as to implement configuration of digital twin tasks in different execution modes, activation and deactivation of the configuration, and the like for a entity terminal. In this way, information processing is implemented in different task execution modes.

To more clearly describe the information processing method provided in the embodiments of this application, the entire process is described below in combination with several examples.

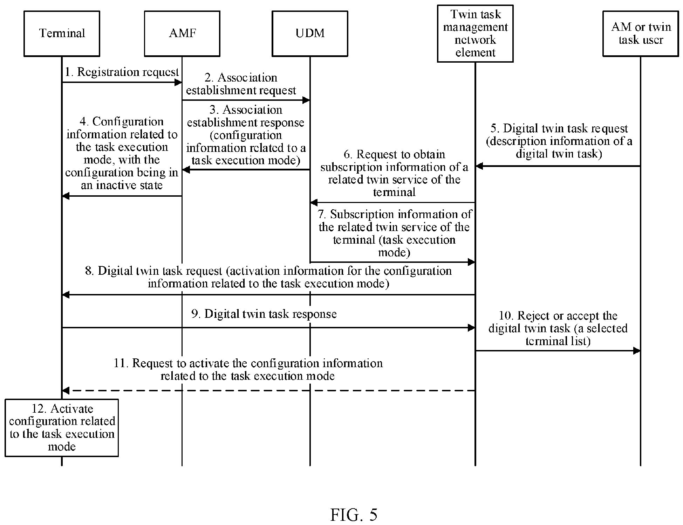

Example 1. The task execution mode is in terminal subscription information, and the configuration information is not related to the task, as shown in FIG. 5.

Step 1: A terminal sends a registration request message to an AMF.

Step 2: The AMF sends an association establishment request message for the terminal to a UDM.

Step 3: Subscription information for a digital twin service related to the terminal in the UDM/UDR includes information about a task execution mode of the terminal.

The UDM determines configuration information related to the task execution mode. The UDM sends an association establishment response message about the terminal to the AMF. The association establishment response message includes at least one of the following: configuration information related to the task execution mode, and state information for the configuration information (for example, a value is an inactive state).

Step 4: The AMF sends a registration accept message to the terminal. The message includes at least one of the following: configuration information related to the task execution mode, and state information for the configuration information (for example, a value is an inactive state).

The terminal saves the configuration information related to the task execution mode and/or state information for the configuration information.

Step 5: A twin task management network element receives a digital twin task request. The twin task request includes description information of the digital twin task.

Step 6: The twin task management network element obtains, from the UDM, subscription information of a related twin service of the terminal.

Step 7: The UDM returns the subscription information of the related twin service of the terminal to the twin task management network element. The subscription information of the related twin service of the terminal includes at least one of the following: task execution mode of the terminal, configuration information related to the task execution mode, and state information (for example, a value is an inactive state) for the configuration information.

Step 8: The twin task management network element sends a digital twin task request to the terminal. Optionally, the request includes at least one of the following: activation information for the configuration information related to the task execution mode, and activation information for the task execution mode.

Based on the activation information for the configuration information related to the task execution mode and/or the activation information for the task execution mode, the terminal proceeds to step 12 when the activation time is reached.

Step 9: The terminal sends a digital twin task response to the digital twin management network element.

Step 10: The digital twin management network element determines to accept or reject the digital twin task.

Step 11: Optionally, upon arrival of the activation time, the digital twin management network element sends, to the terminal, the activation information for the configuration information related to the task execution mode and/or the activation information for the task execution mode.

Based on the activation information for the configuration information related to the task execution mode and/or the activation information for the task execution mode (for example, activation indication information), the terminal proceeds to step 12.

Step 12: The terminal performs a third operation, for example, activating the task execution mode and/or the configuration information related to the task execution mode.

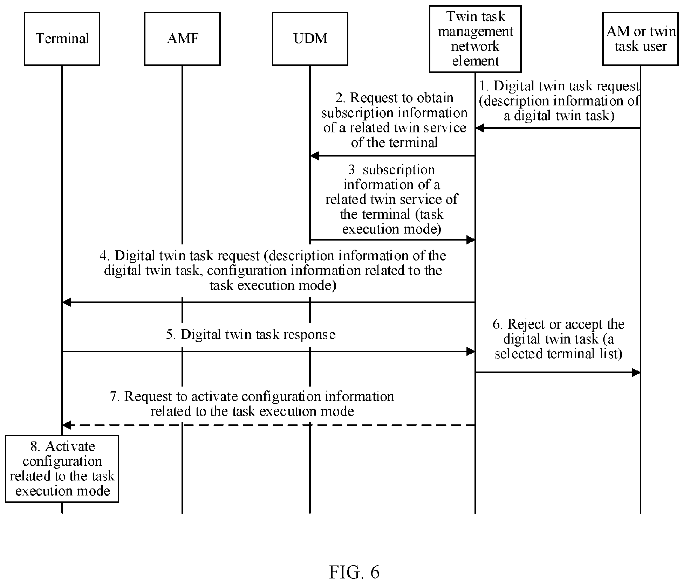

Example 2. The task execution mode is in terminal subscription information, and the configuration information is related to the task, as shown in FIG. 6.

Step 1: A twin task management network element receives a digital twin task request. The twin task request includes description information of the digital twin task.

Step 2: The twin task management network element obtains, from the UDM, subscription information of a related twin service of the terminal.

Step 3: The UDM returns the subscription information of the related twin service of the terminal to the twin task management network element. The subscription information of the related twin service of the terminal includes at least one of the following: task execution mode of the UE, configuration information related to the task execution mode, and state information (for example, a value is an inactive state) for the configuration information.

Step 4: The twin task management network element sends a digital twin task request to the terminal. The request includes at least one of the following: configuration information related to the task execution mode.

Optionally, the request may further include at least one of the following: activation information for the configuration information related to the task execution mode, and activation information for the task execution mode.

Based on the activation information for the configuration information related to the task execution mode and/or the activation information for the task execution mode, the terminal proceeds to step 8 when the activation time is reached.

Step 5: The terminal sends a digital twin task response to the digital twin management network element.

Step 6: The digital twin management network element determines to accept or reject the digital twin task.

Step 7: Optionally, upon arrival of the activation time, the digital twin management network element sends, to the terminal, the activation information for the configuration information related to the task execution mode and/or the activation information for the task execution mode.

Based on the activation information for the configuration information related to the task execution mode and/or the activation information for the task execution mode (for example, activation indication information), the terminal proceeds to step 8.

Step 8: The terminal performs a third operation, for example, activating the task execution mode and/or the configuration information related to the task execution mode.

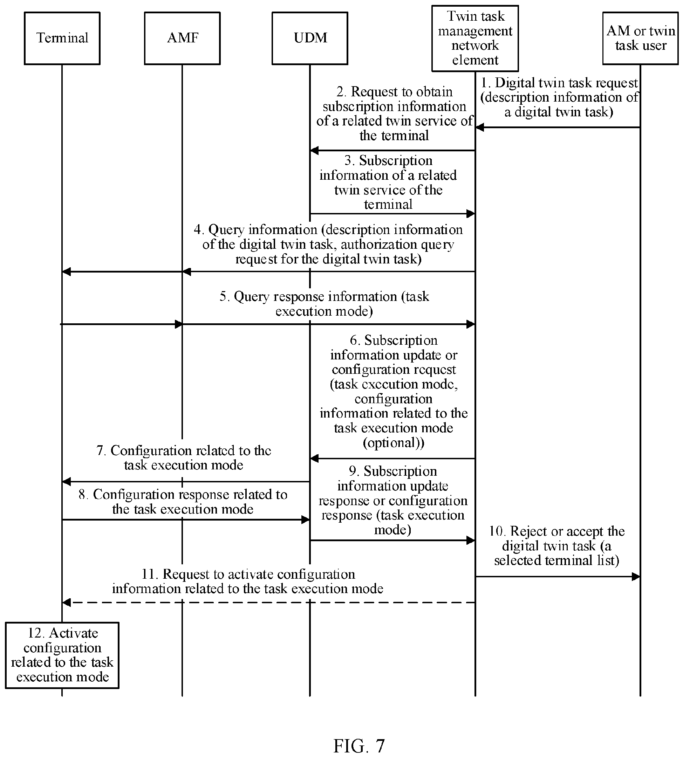

Example 3. The task execution mode is provided by the terminal and the configuration information is related to the task, as shown in FIG. 7.

Step 1: A twin task management network element receives a digital twin task request. The twin task request includes description information of the digital twin task.

Step 2: The twin task management network element obtains, from the UDM, subscription information of a related twin service of the terminal.

Step 3: The UDM returns the subscription information of the related twin service of the terminal to the twin task management network element.

Step 4: The twin task management network element queries the terminal whether it is allowed to perform the digital twin task. The twin task management network element may send the query directly to the terminal or via the AMF.

The query information includes at least one of the following: description information of the digital twin task, and an authorization query request for the digital twin task.

Step 5: The query response information includes at least one of the following: allowing or not allowing the digital twin task, and task execution mode of the terminal.

Step 6: The twin task management network element sends a task execution mode and a configuration request related to the task execution mode to the UDM.

Step 7: The UDM sends a configuration request to the terminal. The request includes at least one of the following: configuration information related to the task execution mode, and information about the task execution mode.

Optionally, the request may further include at least one of the following: activation information for the configuration information related to the task execution mode, and activation information for the task execution mode.

Based on the activation information for the configuration information related to the task execution mode and/or the activation information for the task execution mode, the terminal proceeds to step 12 when the activation time is reached.

Step 8: The terminal sends a configuration response to the UDM.

Step 9: The UDM sends a response to the digital twin management network element.

Step 10: The digital twin management network element determines to accept or reject the digital twin task.

Step 11: Optionally, upon arrival of the activation time, the digital twin management network element sends, to the terminal, the activation information for the configuration information related to the task execution mode and/or the activation information for the task execution mode.

Based on the activation information for the configuration information related to the task execution mode and/or the activation information for the task execution mode (for example, activation indication information), the terminal proceeds to step 12.

Step 12: The terminal performs a third operation, for example, activating the task execution mode and/or the configuration information related to the task execution mode.

In summary, in this embodiment of this application, communication devices in a digital twin network exchange information related to a task execution mode of a terminal, so as to implement configuration of digital twin tasks in different execution modes, activation and deactivation of the configuration, and the like for a entity terminal. In this way, information processing is implemented in different task execution modes.

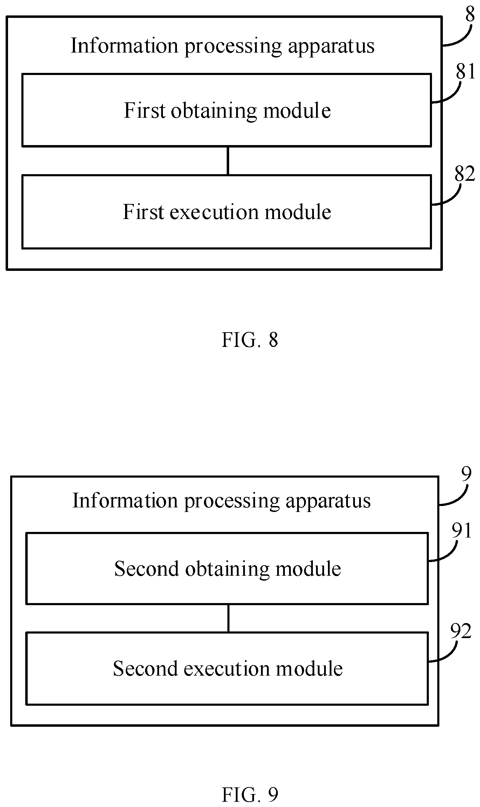

Referring to FIG. 8, FIG. 8 is a schematic structural diagram of an information processing apparatus 8 according to an embodiment of this application. The apparatus is applied to a first communication device. As shown in FIG. 8, the apparatus includes:
a first obtaining module 81, configured to obtain first information, where the first information includes at least one of the following: information about a task execution mode of a terminal, state information for the task execution mode of the terminal, activation time information for the task execution mode of the terminal, and deactivation time information for the task execution mode of the terminal; and
a first execution module 82, configured to perform a first operation based on the first information, where the first operation includes at least one of the following:
   sending second information; and
   requesting for deregistration and/or re-initiating registration after deregistration; where
   the second information includes at least one of the following: information about the task execution mode of the terminal, state information for the task execution mode of the terminal, activation time information for the task execution mode of the terminal, and deactivation time information for the task execution mode of the terminal.

In an optional embodiment, the information about the task execution mode of the terminal includes at least one of the following:
full mode; where in the full mode, the terminal is used only for performing a digital twin service or the terminal is not used for a service other than the digital twin service; and
mixed mode; where in the mixed mode, the terminal is able to be used only for performing a digital twin service or a service other than the digital twin service.

In an optional embodiment, the state information for the task execution mode of the terminal includes one of the following:
the task execution mode of the terminal is in an active state or is activated; and
the task execution mode of the terminal is in an inactive state or is deactivated.

In an optional embodiment, the task execution mode of the terminal includes one of the following:
a task execution mode at a digital twin service granularity, applicable to all digital twin tasks;
a task execution mode per digital twin task;
a task execution mode per time interval; and
a task execution mode per geographic interval.

In an optional embodiment, the first execution module includes:
a first execution submodule, configured to: send the information about the task execution mode of the terminal in a case that a first condition is satisfied, where the first condition includes at least one of the following:
the first communication device is a terminal or an application function AF network element;
at least one of the following is generated or updated: information about the task execution mode of the terminal, state information for the task execution mode of the terminal, and activation time information for the task execution mode of the terminal;
a first request is received, where the first request is used for one of the following: requesting the terminal to perform a digital twin task, or requesting the terminal to perform a digital twin service;
the task execution mode of the terminal is activated or changes from deactivated to activated;
an activation time of the task execution mode of the terminal is reached;
a deactivation time of the task execution mode of the terminal is reached;
a first query is received, where the first query is used to query one of the following: whether the terminal is allowed to perform a digital twin task, or whether the terminal is allowed to perform a digital twin service;
the terminal permits a digital twin task;
the terminal permits a digital twin service;
the terminal has a capability of digital twin service; and
the terminal accesses a first network, the first network being a network supporting a digital twin domain; and
the information about the task execution mode of the terminal is sent to the first network.

In an optional embodiment, the first execution module includes:
a second execution submodule, configured to: send the state information for the task execution mode of the terminal in a case that a second condition is satisfied, where the second condition includes at least one of the following:
the first communication device is a terminal or an application function AF network element;
the task execution mode of the terminal is activated, or deactivated, or changes from deactivated to activated, or changes from activated to deactivated;
an activation time of the task execution mode of the terminal is reached; and
a deactivation time of the task execution mode of the terminal is reached.

In an optional embodiment, in a case that the terminal satisfies a third condition, the state information for the task execution mode of the terminal is an active state, or the first information includes activation time information; where the third condition includes at least one of the following:
the terminal permits a digital twin task; and
the terminal permits a digital twin service.

In an optional embodiment, the first execution module includes:
a third execution submodule, configured to: send second information in a case that a fourth condition is satisfied, where the fourth condition includes at least one of the following:
the first communication device is a network element for user data management;
a third request is received, where the third request is used to request one of the following: subscription information of the terminal, and subscription information for a digital twin task; and
a first association is established or a first association establishment request is received, where the first association is a per-terminal association between a network element for registration control and a network element for user data management.

In an optional embodiment, the information about the task execution mode of the terminal includes one of the following:
information about a task execution mode in subscription information of the terminal;
information about a task execution mode for a digital twin service of the terminal; and
information about a task execution mode per digital twin task of the terminal.

In an optional embodiment, the first execution module includes:
a fourth execution submodule, configured to: in a case that a fifth condition is satisfied, request, based on the first information, for deregistration and/or re-initiating registration after deregistration; where the fifth condition includes at least one of the following:
the first communication device is a terminal;
the task execution mode of the terminal is the full mode;
the task execution mode of the terminal is activated, or changes from deactivated to activated, or changes from activated to deactivated;
an activation time of the task execution mode of the terminal is reached; and
a deactivation time of the task execution mode of the terminal is reached.

In an optional embodiment, the first obtaining module includes at least one of the following:
a first obtaining submodule, configured to obtain the information about the task execution mode of the terminal based on at least one of the following: information about a task execution mode of the terminal preconfigured on the first communication device or information about a task execution mode of the terminal configured by a user on the first communication device;
a second obtaining submodule, configured to obtain the state information for the task execution mode of the terminal based on at least one of the following: state information of a task execution mode of the terminal preconfigured on the first communication device, state information of a task execution mode of the terminal configured by the user on the first communication device, or state information of a task execution mode of the terminal received from a first network;
a third obtaining submodule, configured to receive a first request from the first network;
a fourth obtaining submodule, configured to obtain a second request based on at least one of the following: a second request received from the first network or a second request set by the user in the first communication device;
a fifth obtaining submodule, configured to receive a first query from the first network; and
a sixth obtaining submodule, configured to receive a third request from a network element for registration management.

In an optional embodiment, the first information further includes at least one of the following:
the first communication device is a terminal or an application function AF network element;
a first request, where the first request is used for one of the following: requesting the terminal to perform a digital twin task, or requesting the terminal to perform a digital twin service;
a second request, where the second request is used to request to activate a task execution mode of the terminal;
a first query, where the first query is used to query one of the following: whether the terminal is allowed to perform a digital twin task, or whether the terminal is allowed to perform a digital twin service; and
a third request, where the third request is used to request one of the following: subscription information of the terminal, and subscription information for a digital twin task.

In an optional embodiment, a deregistration request message for requesting deregistration includes one of the following:
information about a task execution mode of the terminal; and
activation indication information for the task execution mode of the terminal, where the activation indication information is used to indicate one of the following: activating the task execution mode of the terminal, or activating a full mode.

In this embodiment of this application, the information processing apparatus 8 is capable of implementing the processes implemented in the method embodiment shown in FIG. 2 of this application, with the same beneficial effects achieved. To avoid repetition, details are not described herein again.

Referring to FIG. 9, FIG. 9 is a schematic structural diagram of an information processing apparatus 9 according to an embodiment of this application. The apparatus is applied to a second communication device. As shown in FIG. 9, the apparatus includes:
a second obtaining module 91, configured to obtain second information, where the second information includes at least one of the following: information about a task execution mode of a terminal, state information for the task execution mode of the terminal, activation time information for the task execution mode of the terminal, and deactivation time information for the task execution mode of the terminal; and
a second execution module 92, configured to perform a second operation based on the second information, where the second operation includes: determining and/or sending third information; where
the third information includes at least one of the following:
   information about the task execution mode of the terminal;
   configuration information related to the task execution mode;
   activation information for the configuration information related to the task execution mode;
   state information for the configuration information related to the task execution mode, where the state information is used to indicate that the configuration information is in an active state or an inactive state;
   activation information for the task execution mode; and
   state information for the task execution mode, where the state information is used to indicate that the task execution mode is in an active state or an inactive state.

In an optional embodiment, the information about the task execution mode of the terminal includes at least one of the following:
full mode; where in the full mode, the terminal is used only for performing a digital twin service or the terminal is not used for a service other than the digital twin service; and
mixed mode; where in the mixed mode, the terminal is able to be used only for performing a digital twin service or a service other than the digital twin service.

In an optional embodiment, the state information for the task execution mode of the terminal includes one of the following:
the task execution mode of the terminal is in an active state or is activated; and
the task execution mode of the terminal is in an inactive state or is deactivated.

In an optional embodiment, the configuration information related to the task execution mode includes at least one of the following:
first configuration information related to the full mode; and
second configuration information related to the mixed mode.

In an optional embodiment, the first configuration information related to the full mode includes at least one of the following:
first indication information, where the first indication information is used to indicate the terminal to perform deregistration and/or re-registration after deregistration;
second indication information for indicating the terminal to use a second certificate or second subscription information, where the second certificate or the second subscription information is used for a digital twin service;
a first network list, where the first network list includes networks supporting a digital twin domain; and
first slice information, where the first slice information includes slices supporting the digital twin domain.

In an optional embodiment, the first network list is used to request the terminal to select a network from the first network list.

In an optional embodiment, the second configuration information related to the mixed mode includes at least one of the following:
first slice information, where the first slice information includes slices supporting the digital twin domain; and
second slice information, where the second slice information includes slices supporting a non digital twin domain.

In an optional embodiment, the first slice information is used to request a terminal to request for a slice in the first slice information.

In an optional embodiment, in a case that a sixth condition is satisfied, the configuration information includes the first configuration information related to the full mode, where the sixth condition includes at least one of the following:
the task execution mode of the terminal is the full mode;
the terminal permits a digital twin service;
the task execution mode of the terminal is activated or changes from deactivated to activated; and
an activation time of the task execution mode of the terminal is reached.

In an optional embodiment, in a case that a seventh condition is satisfied, the configuration information includes the second configuration information related to the mixed mode, where the seventh condition includes at least one of the following:
the task execution mode of the terminal is a mixed mode;
the terminal permits a digital twin service;
the task execution mode of the terminal is activated or changes from deactivated to activated; and
an activation time of the task execution mode of the terminal is reached.

In an optional embodiment, the third information further includes at least one of the following:
activation indication information for the first configuration information; and
activation indication information for the second configuration information.

In an optional embodiment, the activation information for the configuration information includes at least one of the following:
activation time information for the configuration information;
deactivation time information for the configuration information;
third indication information for activating the configuration information;
fourth indication information for deactivating the configuration information; and
fifth indication information for indicating the configuration information being activated upon reception.

In an optional embodiment, the activation information for the task execution mode includes at least one of the following:
activation time information for the task execution mode;
deactivation time information for the task execution mode;
sixth indication information for activating the task execution mode;
seventh indication information for deactivating the task execution mode; and
eighth indication information for indicating the task execution mode being activated upon reception.

In this embodiment of this application, the information processing apparatus 9 is capable of implementing the processes implemented in the method embodiment shown in FIG. 3 of this application, with the same beneficial effects achieved. To avoid repetition, details are not described herein again.

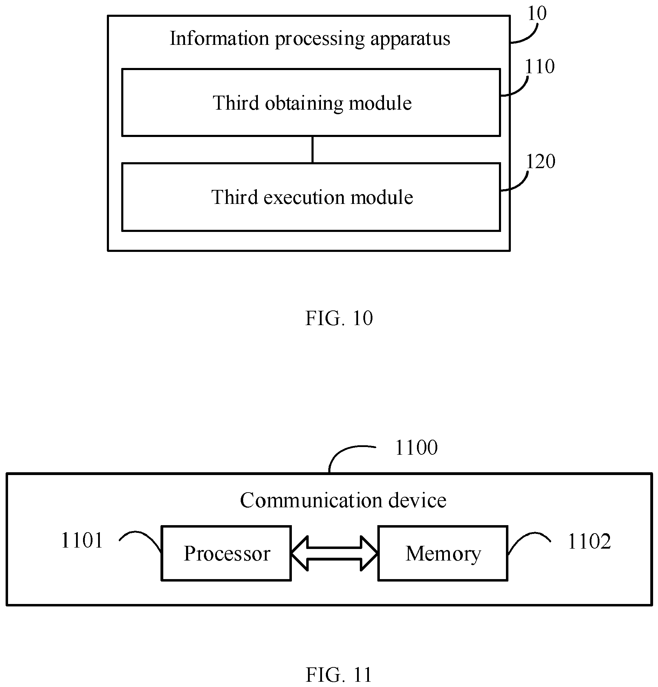

Referring to FIG. 10, FIG. 10 is a schematic structural diagram of an information processing apparatus 10 according to an embodiment of this application. The apparatus is applied to a third communication device. As shown in FIG. 10, the apparatus includes:
a third obtaining module 110, configured to obtain third information, where the third information includes at least one of the following: information about a task execution mode of a terminal, configuration information related to the task execution mode, activation information for the configuration information, state information for the configuration information, activation information for the task execution mode, and state information for the task execution mode; and
a third execution module 120, configured to perform a third operation based on the third information; where the third operation includes at least one of the following:
   activating the task execution mode;
   activating the configuration information related to the task execution mode;
   a fourth operation related to a full mode; and
   a fifth operation related to a mixed mode.

In an optional embodiment, the fourth operation related to the full mode includes at least one of the following:
deregistering a currently accessed network;
selecting and registering a network in a first network list, where the first network list includes networks supporting a digital twin domain;
accessing a network by using a second certificate or second subscription information, where the second certificate or the second subscription information is used for a digital twin service; and
requesting a slice in first slice information, where the first slice information includes slices supporting the digital twin domain.

In an optional embodiment, the fifth operation related to the mixed mode includes at least one of the following:
requesting a slice in first slice information, where the first slice information includes slices supporting a digital twin domain; and
requesting a slice in second slice information, where the second slice information includes slices supporting a non digital twin domain.

In an optional embodiment, the apparatus further includes:
a fourth execution module, configured to: in a case that an eighth condition is satisfied, perform the fourth operation related to the full mode; where the eighth condition includes at least one of the following:
the task execution mode of the terminal is the full mode;
the task execution mode of the terminal is activated or changes from deactivated to activated;
the configuration information related to the task execution mode of the terminal is an active state; and
an activation time of the task execution mode of the terminal is reached.

In an optional embodiment, the apparatus further includes:
a fifth execution module, configured to: in a case that a ninth condition is satisfied, perform the fifth operation related to the mixed mode; where the ninth condition includes at least one of the following:
the task execution mode of the terminal is a mixed mode;
the task execution mode of the terminal is activated or changes from deactivated to activated;
the configuration information related to the task execution mode of the terminal is an active state; and
an activation time of the task execution mode of the terminal is reached.

In an optional embodiment, the state information for the task execution mode is consistent with the state information for the configuration information.

In this embodiment of this application, the information processing apparatus 10 is capable of implementing the processes implemented in the method embodiment shown in FIG. 4 of this application, with the same beneficial effects achieved. To avoid repetition, details are not described herein again.

The information processing apparatus in this embodiment of this application may be an apparatus, or an apparatus or electric device having an operating system, or may be a component, an integrated circuit, or a chip in the terminal. The apparatus or electric device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The information processing apparatus provided in this embodiment of this application is capable of implementing the processes implemented in the method embodiments in FIG. 2 to FIG. 7, with the same technical effects achieved. To avoid repetition, details are not described herein again.

Optionally, as shown in FIG. 11, an embodiment of this application further provides a communication device 1100, including a processor 1101, a memory 1102, and a program or instructions stored in the memory 1102 and capable of running on the processor 1101. For example, the communication device 1100 is a first communication device, a second communication device, or a third communication device. When the program or instructions are executed by the processor 1101, the processes of the foregoing embodiments of the information processing method are implemented, with the same technical effects achieved. To avoid repetition, details are not described herein again.

In a case that the first communication device or the third communication device is a terminal, an embodiment of this application further provides a terminal, including a processor and a communication interface. The communication interface is configured to obtain first information, where the first information includes at least one of the following: information about a task execution mode of a terminal, state information for the task execution mode of the terminal, activation time information for the task execution mode of the terminal, and deactivation time information for the task execution mode of the terminal. The processor is configured to perform a first operation based on the first information, where the first operation includes at least one of the following: sending second information, where the second information includes at least one of the following: information about the task execution mode of the terminal, state information for the task execution mode of the terminal, activation time information for the task execution mode of the terminal, and deactivation time information for the task execution mode of the terminal; and requesting for deregistration and/or re-initiating registration after deregistration. Alternatively, the communication interface is configured to obtain third information, where the third information includes at least one of the following: information about a task execution mode of a terminal, configuration information related to the task execution mode, activation information for the configuration information, state information for the configuration information, activation information for the task execution mode, and state information for the task execution mode; and the processor is configured to perform a third operation based on the third information. The terminal embodiments correspond to the foregoing terminal-side method embodiments, and the implementation processes and implementations of the foregoing method embodiments can be applied to the terminal embodiments, with the same technical effects achieved.

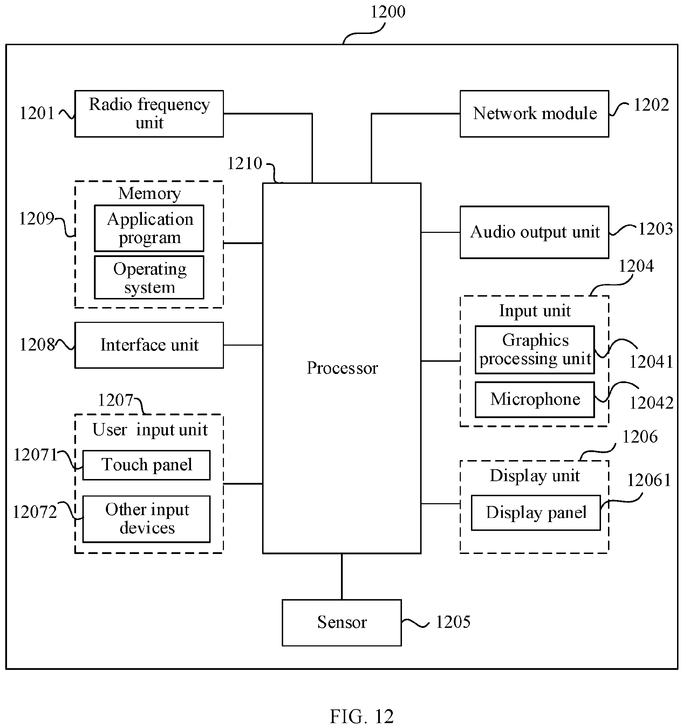

Specifically, FIG. 12 is a schematic diagram of a hardware structure of a terminal for implementing the embodiments of this application.

The terminal 1200 includes but is not limited to at least part of components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

Persons skilled in the art can understand that the terminal 1200 may further include a power supply (for example, a battery) supplying power to the components, and the power supply may be logically connected to the processor 1210 through a power management system. In this way, functions such as charge management, discharge management, and power consumption management are implemented by using the power management system. The structure of the terminal shown in FIG. 12 does not constitute any limitation on the terminal. The terminal may include more or fewer components than shown in the figure, or a combination of some components, or the components disposed differently. Details are not described herein again.

It can be understood that in this embodiment of this application, the input unit 1204 may include a graphics processing unit (Graphics Processing Unit, GPU) 12041 and a microphone 12042. The graphics processing unit 12041 processes image data of a still picture or video obtained by an image capture apparatus (such as a camera) in a video capture mode or an image capture mode. The display unit 1206 may include a display panel 12061, and the display panel 12061 may be configured in a form of a liquid crystal display, an organic light-emitting diode, and the like. The user input unit 1207 may include a touch panel 12071 and other input devices 12072. The touch panel 12071 is also referred to as a touchscreen. The touch panel 12071 may include two parts: a touch detection apparatus and a touch controller. The other input devices 12072 may include but are not limited to a physical keyboard, a function key (such as a volume control key or a power on/off key), a trackball, a mouse, a joystick, and the like. Details are not described herein.

In this embodiment of this application, the radio frequency unit 1201 receives downlink data from a network-side device, and then sends the downlink data to the processor 1210 for processing; and also sends uplink data to the network-side device. Generally, the radio frequency unit 1201 includes but is not limited to an antenna, at least one amplifier, a transceiver, a coupler, a low noise amplifier, a duplexer, and the like.

The memory 1209 may be configured to store software programs or instructions and various data. The memory 1209 may include a program or instruction storage area and a data storage area. The program or instruction storage area may store an operating system, an application program or instruction required by at least one function (for example, a sound playback function or an image playback function), and the like. In addition, the memory 1209 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another volatile solid-state storage device.

The processor 1210 may include one or more processing units. Optionally, an application processor and a modem processor may be integrated in the processor 1210. The application processor primarily processes an operating system, user interfaces, application programs or instructions, and the like. The modem processor primarily processes radio communication, for example, being a baseband processor. It can be understood that the modem processor may alternatively be not integrated in the processor 1210.

The radio frequency unit 1201 is configured to obtain first information, where the first information includes at least one of the following: information about a task execution mode of a terminal, state information for the task execution mode of the terminal, activation time information for the task execution mode of the terminal, and deactivation time information for the task execution mode of the terminal.

The processor 1210 is configured to perform a first operation based on the first information, where the first operation includes at least one of the following: sending second information, and requesting for deregistration and/or re-initiating registration after deregistration, where the second information includes at least one of the following: information about the task execution mode of the terminal, state information for the task execution mode of the terminal, activation time information for the task execution mode of the terminal, and deactivation time information for the task execution mode of the terminal.

Alternatively, the radio frequency unit 1201 is configured to obtain third information, where the third information includes at least one of the following: information about a task execution mode of a terminal, configuration information related to the task execution mode, activation information for the configuration information, state information for the configuration information, activation information for the task execution mode, and state information for the task execution mode.

The processor 1210 is configured to perform a third operation based on the third information.

In this embodiment of this application, communication devices in a digital twin network exchange information related to a task execution mode of a terminal, so as to implement configuration of digital twin tasks in different execution modes, activation and deactivation of the configuration, and the like for an entity terminal. In this way, information processing is implemented in different task execution modes.

In a case that the first communication device or the second communication device is a network-side device, an embodiment of this application further provides a network-side device, including a processor and a communication interface. The communication interface is configured to obtain first information, where the first information includes at least one of the following: information about a task execution mode of a terminal, state information for the task execution mode of the terminal, activation time information for the task execution mode of the terminal, and deactivation time information for the task execution mode of the terminal. The processor is configured to perform a first operation based on the first information, where the first operation includes at least one of the following: sending second information, and requesting for deregistration and/or re-initiating registration after deregistration, where the second information includes at least one of the following: information about the task execution mode of the terminal, state information for the task execution mode of the terminal, activation time information for the task execution mode of the terminal, and deactivation time information for the task execution mode of the terminal. Alternatively, the communication interface is configured to obtain second information, where the second information includes at least one of the following: information about a task execution mode of a terminal, state information for the task execution mode of the terminal, activation time information for the task execution mode of the terminal, and deactivation time information for the task execution mode of the terminal. The processor is configured to perform a second operation based on the second information, where the second operation includes: determining and/or sending third information.

The third information includes at least one of the following:
information about the task execution mode of the terminal;
configuration information related to the task execution mode;
activation information for the configuration information related to the task execution mode;
state information for the configuration information related to the task execution mode, where the state information is used to indicate that the configuration information is in an active state or an inactive state;
activation information for the task execution mode; and
state information for the task execution mode, where the state information is used to indicate that the task execution mode is in an active state or an inactive state.

The network-side device embodiments correspond to the foregoing network-side device method embodiments, and the implementation processes and implementations of the foregoing method embodiments can be applied to the network-side device embodiments, with the same technical effects achieved.

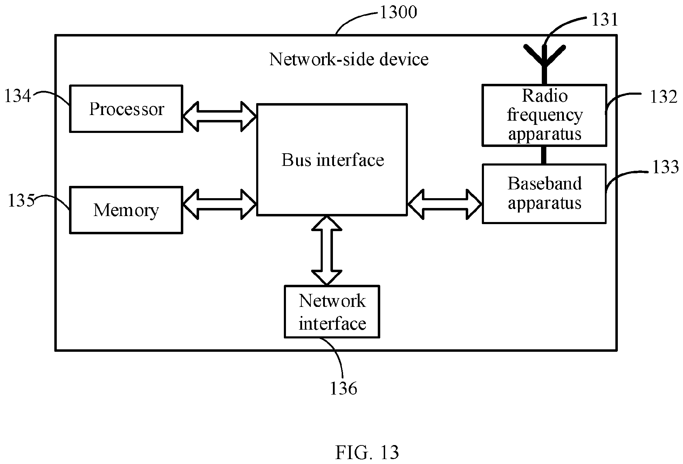

Specifically, an embodiment of this application further provides a network-side device. As shown in FIG. 13, the network-side device 1300 includes an antenna 131, a radio frequency apparatus 132, and a baseband apparatus 133. The antenna 131 is connected to the radio frequency apparatus 132. In an uplink direction, the radio frequency apparatus 132 receives information by using the antenna 131, and sends the received information to the baseband apparatus 133 for processing. In a downlink direction, the baseband apparatus 133 processes to-be-sent information, and sends the information to the radio frequency apparatus 132; and the radio frequency apparatus 132 processes the received information and then sends the information out by using the antenna 131.

The frequency band processing apparatus may be located in the baseband apparatus 133. The method performed by the network-side device in the foregoing embodiments may be implemented in the baseband apparatus 133, and the baseband apparatus 133 includes a processor 134 and a memory 135.

The baseband apparatus 133 may include, for example, at least one baseband board, where a plurality of chips are disposed on the baseband board. As shown in FIG. 13, one of the chips is, for example, the processor 134, connected to the memory 135, to invoke a program in the memory 135 to perform the operation of the network-side device shown in the foregoing method embodiment.

The baseband apparatus 133 may further include a network interface 136, configured to exchange information with the radio frequency apparatus 132, where the interface is, for example, a common public radio interface (common public radio interface, CPRI for short).

Specifically, the network-side device in this embodiment of this application further includes: instructions or a program stored in the memory 135 and capable of running on the processor 134. The processor 134 invokes the instructions or program in the memory 135 to perform the method performed by the modules shown in FIG. 13, with the same technical effects achieved. To avoid repetition, details are not repeated herein.

An embodiment of this application further provides a readable storage medium. The readable storage medium may be non-volatile or volatile. A program or instructions are stored in the readable storage medium. When the program or instructions are executed by a processor, the processes of the foregoing embodiment of the information processing method can be implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a computer program product, where the computer program product is stored in a non-transient storage medium, and when being executed by at least one processor, the computer program product is configured to implement the processes of the foregoing embodiment of the information processing method, with the same technical effects achieved. To avoid repetition, details are not repeated herein.

An embodiment of this application further provides a chip, where the chip includes a processor and a communication interface. The communication interface is coupled to the processor, and the processor is configured to run a program or an instruction to implement the processes of the foregoing embodiment of the information processing method, with the same technical effects achieved. To avoid repetition, details are not described herein again.

It should be understood that the chip mentioned in the embodiments of this application may also be referred to as a system-level chip, a system chip, a chip system, a system-on-chip, or the like.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network-side device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. An information processing method, comprising:
obtaining, by a first communication device, first information, wherein the first information comprises at least one of the following: information about a task execution mode of a terminal, state information for the task execution mode of the terminal, activation time information for the task execution mode of the terminal, and deactivation time information for the task execution mode of the terminal; and
performing, by the first communication device, a first operation based on the first information, wherein the first operation comprises at least one of the following:
sending second information; and
requesting for deregistration and/or re-initiating registration after deregistration; wherein
the second information comprises at least one of the following: information about the task execution mode of the terminal, state information for the task execution mode of the terminal, activation time information for the task execution mode of the terminal, and deactivation time information for the task execution mode of the terminal.

2. The method according to claim 1, wherein the information about the task execution mode of the terminal comprises at least one of the following:
full mode; wherein in the full mode, the terminal is used only for performing a digital twin service or the terminal is not used for a service other than the digital twin service; and
mixed mode; wherein in the mixed mode, the terminal is able to be used only for performing a digital twin service or a service other than the digital twin service.

3. The method according to claim 1, wherein the state information for the task execution mode of the terminal comprises at least one of the following:
the task execution mode of the terminal is in an active state or is activated; and
the task execution mode of the terminal is in an inactive state or is deactivated.

4. The method according to claim 1, wherein the task execution mode of the terminal comprises one of the following:
a task execution mode at a digital twin service granularity, applicable to all digital twin tasks;
a task execution mode per digital twin task;
a task execution mode per time interval; and
a task execution mode per geographic interval.

5. The method according to any one of claims 1 to 4, wherein the sending, by the first communication device, the second information comprises:
sending, by the first communication device, the information about the task execution mode of the terminal in a case that a first condition is satisfied, wherein the first condition comprises at least one of the following:
the first communication device is a terminal or an application function AF network element;
at least one of the following is generated or updated: information about the task execution mode of the terminal, state information for the task execution mode of the terminal, and activation time information for the task execution mode of the terminal;
a first request is received, wherein the first request is used for one of the following: requesting the terminal to perform a digital twin task, or requesting the terminal to perform a digital twin service;
the task execution mode of the terminal is activated or changes from deactivated to activated;
an activation time of the task execution mode of the terminal is reached;
a deactivation time of the task execution mode of the terminal is reached;
a first query is received, wherein the first query is used to query one of the following: whether the terminal is allowed to perform a digital twin task, or whether the terminal is allowed to perform a digital twin service;
the terminal permits a digital twin task;
the terminal permits a digital twin service;
the terminal has a capability of digital twin service; and
the terminal accesses a first network, the first network being a network supporting a digital twin domain.

6. The method according to any one of claims 1 to 4, wherein the sending, by the first communication device, the second information based on the first information comprises:
sending, by the first communication device, the state information for the task execution mode of the terminal in a case that a second condition is satisfied, wherein the second condition comprises at least one of the following:
the first communication device is a terminal or an application function AF network element;
the task execution mode of the terminal is activated, or deactivated, or changes from deactivated to activated, or changes from activated to deactivated;
an activation time of the task execution mode of the terminal is reached; and
a deactivation time of the task execution mode of the terminal is reached.

7. The method according to claim 6, wherein
in a case that the terminal satisfies a third condition, the state information for the task execution mode of the terminal is an active state, or the first information comprises activation time information; wherein the third condition comprises at least one of the following:
the terminal permits a digital twin task; and
the terminal permits a digital twin service.

8. The method according to any one of claims 1 to 4, wherein the sending, by the first communication device, the second information based on the first information comprises:
sending, by the first communication device, the second information in a case that a fourth condition is satisfied, wherein the fourth condition comprises at least one of the following:
the first communication device is a network element for user data management;
a third request is received, wherein the third request is used to request one of the following: subscription information of the terminal, and subscription information for a digital twin task; and
a first association is established or a first association establishment request is received, wherein the first association is a per-terminal association between a network element for registration control and a network element for user data management.

9. The method according to claim 8, wherein the information about the task execution mode of the terminal is one of the following:
information about a task execution mode in subscription information of the terminal;
information about a task execution mode for a digital twin service of the terminal; and
information about a task execution mode per digital twin task of the terminal.

10. The method according to any one of claims 1 to 4, wherein the requesting, by the first communication device based on the first information, for deregistration and/or re-initiating registration after deregistration comprises:
in a case that a fifth condition is satisfied, requesting, by the first communication device based on the first information, for deregistration and/or re-initiating registration after deregistration; wherein the fifth condition comprises at least one of the following:
the first communication device is a terminal;
the task execution mode of the terminal is a full mode;
the task execution mode of the terminal is activated, or changes from deactivated to activated, or changes from activated to deactivated;
an activation time of the task execution mode of the terminal is reached; and
a deactivation time of the task execution mode of the terminal is reached.

11. The method according to any one of claims 1 to 4, wherein the obtaining, by a first communication device, first information comprises at least one of the following:
obtaining, by the first communication device, the information about the task execution mode of the terminal based on at least one of the following: information about a task execution mode of the terminal preconfigured on the first communication device or information about a task execution mode of the terminal configured by a user on the first communication device;
obtaining, by the first communication device, the state information for the task execution mode of the terminal based on at least one of the following: state information of a task execution mode of the terminal preconfigured on the first communication device, state information of a task execution mode of the terminal configured by the user on the first communication device, or state information of a task execution mode of the terminal received from a first network;
receiving, by the first communication device, a first request from the first network;
obtaining, by the first communication device, a second request based on at least one of the following: a second request received from the first network or a second request set by the user in the first communication device;
receiving, by the first communication device, a first query from the first network; and
receiving, by the first communication device, a third request from a network element for registration management.

12. The method according to claim 1, wherein the first information further comprises at least one of the following:
the first communication device is a terminal or an application function AF network element;
a first request, wherein the first request is used for one of the following: requesting the terminal to perform a digital twin task, or requesting the terminal to perform a digital twin service;
a second request, wherein the second request is used to request to activate a task execution mode of the terminal;
a first query, wherein the first query is used to query one of the following: whether the terminal is allowed to perform a digital twin task, or whether the terminal is allowed to perform a digital twin service; and
a third request, wherein the third request is used to request one of the following: subscription information of the terminal, and subscription information for a digital twin task.

13. The method according to claim 1, wherein a deregistration request message for requesting deregistration comprises one of the following:
information about a task execution mode of the terminal; and
activation indication information for the task execution mode of the terminal, wherein the activation indication information is used to indicate one of the following: activating the task execution mode of the terminal, or activating a full mode.

14. An information processing method, comprising:
obtaining, by a second communication device, second information, wherein the second information comprises at least one of the following: information about a task execution mode of a terminal, state information for the task execution mode of the terminal, activation time information for the task execution mode of the terminal, and deactivation time information for the task execution mode of the terminal; and
performing, by the second communication device, a second operation based on the second information, wherein the second operation comprises: determining and/or sending third information; wherein
the third information comprises at least one of the following:
information about the task execution mode of the terminal;
configuration information related to the task execution mode;
activation information for the configuration information related to the task execution mode;
state information for the configuration information related to the task execution mode, wherein the state information is used to indicate that the configuration information is in an active state or an inactive state;
activation information for the task execution mode; and
state information for the task execution mode, wherein the state information is used to indicate that the task execution mode is in an active state or an inactive state.

15. The method according to claim 14, wherein the information about the task execution mode of the terminal comprises at least one of the following:
full mode; wherein in the full mode, the terminal is used only for performing a digital twin service or the terminal is not used for a service other than the digital twin service; and
mixed mode; wherein in the mixed mode, the terminal is able to be used only for performing a digital twin service or a service other than the digital twin service.

16. The method according to claim 14, wherein the state information for the task execution mode of the terminal comprises at least one of the following:
the task execution mode of the terminal is in an active state or is activated; and
the task execution mode of the terminal is in an inactive state or is deactivated.

17. The method according to claim 15, wherein the configuration information related to the task execution mode comprises at least one of the following:
first configuration information related to the full mode; and
second configuration information related to the mixed mode.

18. The method according to claim 17, wherein the first configuration information related to the full mode comprises at least one of the following:
first indication information, wherein the first indication information is used to indicate the terminal to perform deregistration and/or re-registration after deregistration;
second indication information for indicating the terminal to use a second certificate or second subscription information, wherein the second certificate or the second subscription information is used for a digital twin service;
a first network list, wherein the first network list comprises networks supporting a digital twin domain; and
first slice information, wherein the first slice information comprises slices supporting the digital twin domain.

19. The method according to claim 18, wherein the first network list is used to request the terminal to select a network from the first network list.

20. The method according to claim 17, wherein the second configuration information related to the mixed mode comprises at least one of the following:
first slice information, wherein the first slice information comprises slices supporting the digital twin domain; and
second slice information, wherein the second slice information comprises slices supporting a non digital twin domain.

21. The method according to claim 18 or 20, wherein the first slice information is used to request a terminal to request for a slice in the first slice information.

22. The method according to claim 17, wherein in a case that a sixth condition is satisfied, the configuration information comprises the first configuration information related to the full mode, wherein the sixth condition comprises at least one of the following:
the task execution mode of the terminal is a full mode;
the terminal permits a digital twin service;
the task execution mode of the terminal is activated or changes from deactivated to activated; and
an activation time of the task execution mode of the terminal is reached.

23. The method according to claim 17, wherein in a case that a seventh condition is satisfied, the configuration information comprises the second configuration information related to the mixed mode, wherein the seventh condition comprises at least one of the following:
the task execution mode of the terminal is a mixed mode;
the terminal permits a digital twin service;
the task execution mode of the terminal is activated or changes from deactivated to activated; and
an activation time of the task execution mode of the terminal is reached.

24. The method according to claim 17, wherein the third information further comprises at least one of the following:
activation indication information for the first configuration information; and
activation indication information for the second configuration information.

25. The method according to claim 14, wherein the activation information for the configuration information comprises at least one of the following:
activation time information for the configuration information;
deactivation time information for the configuration information;
third indication information for activating the configuration information;
fourth indication information for deactivating the configuration information; and
fifth indication information for indicating the configuration information being activated upon reception.

26. The method according to claim 14, wherein the activation information for the task execution mode comprises at least one of the following:
activation time information for the task execution mode;
deactivation time information for the task execution mode;
sixth indication information for activating the task execution mode;
seventh indication information for deactivating the task execution mode; and
eighth indication information for indicating the task execution mode being activated upon reception.

27. An information processing method, comprising:
obtaining, by a third communication device, third information, wherein the third information comprises at least one of the following: information about a task execution mode of a terminal, configuration information related to the task execution mode, activation information for the configuration information, state information for the configuration information, activation information for the task execution mode, and state information for the task execution mode; and
performing, by the third communication device, a third operation based on the third information; wherein
the third operation comprises at least one of the following:
activating the task execution mode;
activating the configuration information related to the task execution mode;
a fourth operation related to a full mode; and
a fifth operation related to a mixed mode.

28. The method according to claim 27, wherein the fourth operation related to the full mode comprises at least one of the following:
deregistering a currently accessed network;
selecting and registering a network in a first network list, wherein the first network list comprises networks supporting a digital twin domain;
accessing a network by using a second certificate or second subscription information, wherein the second certificate or the second subscription information is used for a digital twin service; and
requesting a slice in first slice information, wherein the first slice information comprises slices supporting the digital twin domain.

29. The method according to claim 27, wherein the fifth operation related to the mixed mode comprises at least one of the following:
requesting a slice in first slice information, wherein the first slice information comprises slices supporting a digital twin domain; and
requesting a slice in second slice information, wherein the second slice information comprises slices supporting a non digital twin domain.

30. The method according to claim 27 or 28, wherein the method further comprises:
in a case that an eighth condition is satisfied, performing, by the third communication device, the fourth operation related to the full mode; wherein the eighth condition comprises at least one of the following:
the task execution mode of the terminal is the full mode;
the task execution mode of the terminal is activated or changes from deactivated to activated;
the configuration information related to the task execution mode of the terminal is an active state; and
an activation time of the task execution mode of the terminal is reached.

31. The method according to claim 27 or 29, wherein the method further comprises:
in a case that a ninth condition is satisfied, performing, by the third communication device, the fifth operation related to the mixed mode; wherein the ninth condition comprises at least one of the following:
the task execution mode of the terminal is a mixed mode;
the task execution mode of the terminal is activated or changes from deactivated to activated;
the configuration information related to the task execution mode of the terminal is an active state; and
an activation time of the task execution mode of the terminal is reached.

32. The method according to claim 27, wherein the state information for the task execution mode is consistent with the state information for the configuration information.

33. An information processing apparatus, applied to a first communication device and comprising:
a first obtaining module, configured to obtain first information, wherein the first information comprises at least one of the following: information about a task execution mode of a terminal, state information for the task execution mode of the terminal, activation time information for the task execution mode of the terminal, and deactivation time information for the task execution mode of the terminal; and
a first execution module, configured to perform a first operation based on the first information, wherein the first operation comprises at least one of the following:
sending second information; and
requesting for deregistration and/or re-initiating registration after deregistration; wherein
the second information comprises at least one of the following: information about the task execution mode of the terminal, state information for the task execution mode of the terminal, activation time information for the task execution mode of the terminal, and deactivation time information for the task execution mode of the terminal.

34. The apparatus according to claim 33, wherein the information about the task execution mode of the terminal comprises at least one of the following:
full mode; wherein in the full mode, the terminal is used only for performing a digital twin service or the terminal is not used for a service other than the digital twin service; and
mixed mode; wherein in the mixed mode, the terminal is able to be used only for performing a digital twin service or a service other than the digital twin service.

35. The apparatus according to claim 33, wherein the state information for the task execution mode of the terminal comprises at least one of the following:
the task execution mode of the terminal is in an active state or is activated; and
the task execution mode of the terminal is in an inactive state or is deactivated.

36. The apparatus according to claim 33, wherein the task execution mode of the terminal comprises one of the following:
a task execution mode at a digital twin service granularity, applicable to all digital twin tasks;
a task execution mode per digital twin task;
a task execution mode per time interval; and
a task execution mode per geographic interval.

37. The apparatus according to any one of claims 33 to 36, wherein the first execution module comprises:
a first execution submodule, configured to: send the information about the task execution mode of the terminal in a case that a first condition is satisfied, wherein the first condition comprises at least one of the following:
the first communication device is a terminal or an application function AF network element;
at least one of the following is generated or updated: information about the task execution mode of the terminal, state information for the task execution mode of the terminal, and activation time information for the task execution mode of the terminal;
a first request is received, wherein the first request is used for one of the following: requesting the terminal to perform a digital twin task, or requesting the terminal to perform a digital twin service;
the task execution mode of the terminal is activated or changes from deactivated to activated;
an activation time of the task execution mode of the terminal is reached;
a deactivation time of the task execution mode of the terminal is reached;
a first query is received, wherein the first query is used to query one of the following: whether the terminal is allowed to perform a digital twin task, or whether the terminal is allowed to perform a digital twin service;
the terminal permits a digital twin task;
the terminal permits a digital twin service;
the terminal has a capability of digital twin service; and
the terminal accesses a first network, the first network being a network supporting a digital twin domain; and
the information about the task execution mode of the terminal is sent to the first network.

38. The apparatus according to any one of claims 33 to 36, wherein the first execution module comprises:
a second execution submodule, configured to: send the state information for the task execution mode of the terminal in a case that a second condition is satisfied, wherein the second condition comprises at least one of the following:
the first communication device is a terminal or an application function AF network element;
the task execution mode of the terminal is activated, or deactivated, or changes from deactivated to activated, or changes from activated to deactivated;
an activation time of the task execution mode of the terminal is reached; and
a deactivation time of the task execution mode of the terminal is reached.

39. The apparatus according to claim 38, wherein in a case that the terminal satisfies a third condition, the state information for the task execution mode of the terminal is an active state, or the first information comprises activation time information; wherein the third condition comprises at least one of the following:
the terminal permits a digital twin task; and
the terminal permits a digital twin service.

40. The apparatus according to any one of claims 33 to 36, wherein the first execution module comprises:
a third execution submodule, configured to: send second information in a case that a fourth condition is satisfied, wherein the fourth condition comprises at least one of the following:
the first communication device is a network element for user data management;
a third request is received, wherein the third request is used to request one of the following: subscription information of the terminal, and subscription information for a digital twin task; and
a first association is established or a first association establishment request is received, wherein the first association is a per-terminal association between a network element for registration control and a network element for user data management.

41. The apparatus according to claim 40, wherein the information about the task execution mode of the terminal is one of the following:
information about a task execution mode in subscription information of the terminal;
information about a task execution mode for a digital twin service of the terminal; and
information about a task execution mode per digital twin task of the terminal.

42. The apparatus according to any one of claims 33 to 36, wherein the first execution module comprises:
a fourth execution submodule, configured to: in a case that a fifth condition is satisfied, request, based on the first information, for deregistration and/or re-initiating registration after deregistration; wherein the fifth condition comprises at least one of the following:
the first communication device is a terminal;
the task execution mode of the terminal is the full mode;
the task execution mode of the terminal is activated, or changes from deactivated to activated, or changes from activated to deactivated;
an activation time of the task execution mode of the terminal is reached; and
a deactivation time of the task execution mode of the terminal is reached.

43. The apparatus according to any one of claims 33 to 36, wherein the first obtaining module comprises at least one of the following:
a first obtaining submodule, configured to obtain the information about the task execution mode of the terminal based on at least one of the following: information about a task execution mode of the terminal preconfigured on the first communication device or information about a task execution mode of the terminal configured by a user on the first communication device;
a second obtaining submodule, configured to obtain the state information for the task execution mode of the terminal based on at least one of the following: state information of a task execution mode of the terminal preconfigured on the first communication device, state information of a task execution mode of the terminal configured by the user on the first communication device, or state information of a task execution mode of the terminal received from a first network;
a third obtaining submodule, configured to receive a first request from the first network;
a fourth obtaining submodule, configured to obtain a second request based on at least one of the following: a second request received from the first network or a second request set by the user in the first communication device;
a fifth obtaining submodule, configured to receive a first query from the first network; and
a sixth obtaining submodule, configured to receive a third request from a network element for registration management.

44. The apparatus according to claim 33, wherein the first information further comprises at least one of the following:
the first communication device is a terminal or an application function AF network element;
a first request, wherein the first request is used for one of the following: requesting the terminal to perform a digital twin task, or requesting the terminal to perform a digital twin service;
a second request, wherein the second request is used to request to activate a task execution mode of the terminal;
a first query, wherein the first query is used to query one of the following: whether the terminal is allowed to perform a digital twin task, or whether the terminal is allowed to perform a digital twin service; and
a third request, wherein the third request is used to request one of the following: subscription information of the terminal, and subscription information for a digital twin task.

45. The apparatus according to claim 33, wherein a deregistration request message for requesting deregistration comprises one of the following:
information about a task execution mode of the terminal; and
activation indication information for the task execution mode of the terminal, wherein the activation indication information is used to indicate one of the following: activating the task execution mode of the terminal, or activating a full mode.

46. An information processing apparatus, applied to a second communication device and comprising:
a second obtaining module, configured to obtain second information, wherein the second information comprises at least one of the following: information about a task execution mode of a terminal, state information for the task execution mode of the terminal, activation time information for the task execution mode of the terminal, and deactivation time information for the task execution mode of the terminal; and
a second execution module, configured to perform a second operation based on the second information, wherein the second operation comprises: determining and/or sending third information; wherein
the third information comprises at least one of the following:
information about the task execution mode of the terminal;
configuration information related to the task execution mode;
activation information for the configuration information related to the task execution mode;
state information for the configuration information related to the task execution mode, wherein the state information is used to indicate that the configuration information is in an active state or an inactive state;
activation information for the task execution mode; and
state information for the task execution mode, wherein the state information is used to indicate that the task execution mode is in an active state or an inactive state.

47. The apparatus according to claim 46, wherein the information about the task execution mode of the terminal comprises at least one of the following:
full mode; wherein in the full mode, the terminal is used only for performing a digital twin service or the terminal is not used for a service other than the digital twin service; and
mixed mode; wherein in the mixed mode, the terminal is able to be used only for performing a digital twin service or a service other than the digital twin service.

48. The apparatus according to claim 46, wherein the state information for the task execution mode of the terminal comprises at least one of the following:
the task execution mode of the terminal is in an active state or is activated; and
the task execution mode of the terminal is in an inactive state or is deactivated.

49. The apparatus according to claim 47, wherein the configuration information related to the task execution mode comprises at least one of the following:
first configuration information related to the full mode; and
second configuration information related to the mixed mode.

50. The apparatus according to claim 49, wherein the first configuration information related to the full mode comprises at least one of the following:
first indication information, wherein the first indication information is used to indicate the terminal to perform deregistration and/or re-registration after deregistration;
second indication information for indicating the terminal to use a second certificate or second subscription information, wherein the second certificate or the second subscription information is used for a digital twin service;
a first network list, wherein the first network list comprises networks supporting a digital twin domain; and
first slice information, wherein the first slice information comprises slices supporting the digital twin domain.

51. The apparatus according to claim 50, wherein the first network list is used to request the terminal to select a network from the first network list.

52. The apparatus according to claim 49, wherein the second configuration information related to the mixed mode comprises at least one of the following:
first slice information, wherein the first slice information comprises slices supporting the digital twin domain; and
second slice information, wherein the second slice information comprises slices supporting a non digital twin domain.

53. The apparatus according to claim 50 or 52, wherein the first slice information is used to request a terminal to request for a slice in the first slice information.

54. The apparatus according to claim 49, wherein in a case that a sixth condition is satisfied, the configuration information comprises the first configuration information related to the full mode, wherein the sixth condition comprises at least one of the following:
the task execution mode of the terminal is the full mode;
the terminal permits a digital twin service;
the task execution mode of the terminal is activated or changes from deactivated to activated; and
an activation time of the task execution mode of the terminal is reached.

55. The apparatus according to claim 49, wherein in a case that a seventh condition is satisfied, the configuration information comprises the second configuration information related to the mixed mode, wherein the seventh condition comprises at least one of the following:
the task execution mode of the terminal is a mixed mode;
the terminal permits a digital twin service;
the task execution mode of the terminal is activated or changes from deactivated to activated; and
an activation time of the task execution mode of the terminal is reached.

56. The apparatus according to claim 49, wherein the third information further comprises at least one of the following:
activation indication information for the first configuration information; and
activation indication information for the second configuration information.

57. The apparatus according to claim 46, wherein the activation information for the configuration information comprises at least one of the following:
activation time information for the configuration information;
deactivation time information for the configuration information;
third indication information for activating the configuration information;
fourth indication information for deactivating the configuration information; and
fifth indication information for indicating the configuration information being activated upon reception.

58. The apparatus according to claim 46, wherein the activation information for the task execution mode comprises at least one of the following:
activation time information for the task execution mode;
deactivation time information for the task execution mode;
sixth indication information for activating the task execution mode;
seventh indication information for deactivating the task execution mode; and
eighth indication information for indicating the task execution mode being activated upon reception.

59. An information processing apparatus, applied to a third communication device and comprising:
a third obtaining module, configured to obtain third information, wherein the third information comprises at least one of the following: information about a task execution mode of a terminal, configuration information related to the task execution mode, activation information for the configuration information, state information for the configuration information, activation information for the task execution mode, and state information for the task execution mode; and
a third execution module, configured to perform a third operation based on the third information; wherein
the third operation comprises at least one of the following:
activating the task execution mode;
activating the configuration information related to the task execution mode;
a fourth operation related to a full mode; and
a fifth operation related to a mixed mode.

60. The apparatus according to claim 59, wherein the fourth operation related to the full mode comprises at least one of the following:
deregistering a currently accessed network;
selecting and registering a network in a first network list, wherein the first network list comprises networks supporting a digital twin domain;
accessing a network by using a second certificate or second subscription information, wherein the second certificate or the second subscription information is used for a digital twin service; and
requesting a slice in first slice information, wherein the first slice information comprises slices supporting the digital twin domain.

61. The apparatus according to claim 59, wherein the fifth operation related to the mixed mode comprises at least one of the following:
requesting a slice in first slice information, wherein the first slice information comprises slices supporting a digital twin domain; and
requesting a slice in second slice information, wherein the second slice information comprises slices supporting a non digital twin domain.

62. The apparatus according to claim 59 or 60, wherein the apparatus further comprises:
a fourth execution module, configured to: in a case that an eighth condition is satisfied, perform the fourth operation related to the full mode; wherein the eighth condition comprises at least one of the following:
the task execution mode of the terminal is the full mode;
the task execution mode of the terminal is activated or changes from deactivated to activated;
the configuration information related to the task execution mode of the terminal is an active state; and
an activation time of the task execution mode of the terminal is reached.

63. The apparatus according to claim 59 or 61, wherein the apparatus further comprises:
a fifth execution module, configured to: in a case that a ninth condition is satisfied, perform the fifth operation related to the mixed mode; wherein the ninth condition comprises at least one of the following:
the task execution mode of the terminal is a mixed mode;
the task execution mode of the terminal is activated or changes from deactivated to activated;
the configuration information related to the task execution mode of the terminal is an active state; and
an activation time of the task execution mode of the terminal is reached.

64. The apparatus according to claim 59, wherein the state information for the task execution mode is consistent with the state information for the configuration information.

65. A communication device, comprising a processor, a memory, and a program or instructions stored in the memory and capable of running on the processor, wherein when the program or instructions are executed by the processor, the steps of the information processing method according to any one of claims 1 to 13 are implemented, or the steps of the information processing method according to any one of claims 14 to 26 are implemented, or the steps of the information processing method according to any one of claims 27 to 32 are implemented.

66. A readable storage medium, wherein the readable storage medium stores a program or instructions, and when the program or instructions are executed by a processor, the steps of the information processing method according to any one of claims 1 to 13 are implemented, or the steps of the information processing method according to any one of claims 14 to 26 are implemented, or the steps of the information processing method according to any one of claims 27 to 32 are implemented.

67. A chip, comprising a processor and a communication interface, wherein the communication interface is coupled to the processor, and the processor is configured to run a program or instructions to implement the steps of the information processing method according to any one of claims 1 to 13, or the steps of the information processing method according to any one of claims 14 to 26, or the steps of the information processing method according to any one of claims 27 to 32.

68. A computer program product, wherein the computer program product is stored in a non-transitory readable storage medium, and the computer program product is executed by at least one processor to implement the steps of the information processing method according to any one of claims 1 to 13, or the steps of the information processing method according to any one of claims 14 to 26, or the steps of the information processing method according to any one of claims 27 to 32.

69. A communication device, configured to perform the steps of the information processing method according to any one of claims 1 to 13, or the steps of the information processing method according to any one of claims 14 to 26, or the steps of the information processing method according to any one of claims 27 to 32.
